# EUROPÄISCHE PATENTSCHRIFT

(11) **EP 1 656 506 B1**
(45) Veröffentlichungstag und Bekanntmachung des Hinweises auf die Patenterteilung: **11.08.2010**
(21) Anmeldenummer: 04764212.9
(22) Anmeldetag: 17.08.2004
(51) Int. Cl.: F16C 1/14

(54) **VERSTELLVORRICHTUNG FÜR EINE BOWDENZUGANORDNUNG**
ADJUSTING DEVICE FOR A BOWDEN CABLE ARRANGEMENT
DISPOSITIF DE REGLAGE POUR UN ENSEMBLE CABLE BOWDEN

(30) Priorität: 22.08.2003 DE 10338737
(43) Veröffentlichungstag der Anmeldung: 17.05.2006
(60) Teilanmeldung: 07018926.1
(73) Patentinhaber: Schukra Gerätebau AG, 2560 Berndorf (AT)
(72) Erfinder: STÖSSEL, Veit, 90409 Nürnberg (DE); FALSTER, Frank, 90480 Nürnberg (DE); KOPETZKY, Robert, A-8010 Graz (AT)
(74) Vertreter: Banzer, Hans-Jörg
(86) Internationale Anmeldenummer: PCT/EP2004/009224
(87) Internationale Veröffentlichungsnummer: WO 2005/021984

(56) Entgegenhaltungen:
- EP-A1- 0 517 583
- EP-A1- 0 774 590

## Beschreibung

Die vorliegende Erfindung betrifft eine Verstellvorrichtung für eine Bowdenzuganordnung, welche insbesondere zum Verstellen der Wölbung einer in einer Lehne eines Sitzes, beispielsweise eines Kraftfahrzeugsitzes, angeordneten Becken- und/oder Lordosenstütze verwendet werden kann. Eine derartige Verstellvorrichtung wird auch als Aktuator oder Spann- bzw. Handschloss bezeichnet, wobei eine Drehbewegung in eine Zug- oder Schubbewegung eines Kabels, Seils oder Drahts der Bowdenzuganordnung umgesetzt wird und dies beispielsweise mit Hilfe eines an dem jeweiligen Sitz angebrachten Handrads oder Hebels erfolgen kann.

Eine derartige Verstellvorrichtung gemäß dem Oberbegriff von Anspruch 1 ist beispielsweise aus der EP 0 706 338 B1 der Anmelderin bekannt. Die in dieser Druckschrift vorgeschlagene Verstellvorrichtung umfasst ein in einem Gehäuse axial beweglich geführtes, jedoch drehfest angeordnetes erstes Gewindeteil in Form einer Gewindespindel mit einem Außengewinde, welches sich in Gewindeeingriff mit einem Innengewinde eines zweiten Gewindeteils in Form eines Gewinderings, welcher in dem Gehäuse axialfest und drehbar angeordnet ist, befindet. In dem Gehäuse und in der Gewindespindel ist jeweils eine axiale, miteinander fluchtende zentrale Bohrung für die Durchführung eines Drahts einer Bowdenzuganordnung angeordnet, wobei die zentrale Bohrung der Gewindespindel in einen zu einem Verstellgriff gerichteten Innenraum zur Aufnahme des Nippels des entsprechenden Drahtendes mündet. Darüber hinaus ist in der Seitenwand des Gehäuses eine radiale Öffnung und in der Seitenwand der Gewindespindel eine Querbohrung ausgebildet, wobei die radiale Öffnung des Gehäuses mit der Querbohrung der Gewindespindel bei einer entsprechenden Stellung der Gewindespindel relativ zu dem Gehäuse miteinander fluchten und einen gemeinsamen Durchgang bilden, welcher die Durchführung des Nippels des Drahtendes ermöglicht. Die Öffnung in der Seitenwand des Gehäuses und die Querbohrung in der Seitenwand der Gewindespindel sind mit der jeweiligen zentralen Bohrung durch einen Schlitz verbunden, so dass der Nippel des Drahtendes durch die radiale Öffnung in der Seitenwand des Gehäuses und die entsprechend ausgerichtete Querbohrung in der Seitenwand der Gewindespindel in den Innenraum der Gewindespindel in radialer Richtung eingesetzt werden kann. Anschließend kann der Draht entlang der in dem Gehäuse und in der Gewindespindel ausgebildeten Schlitze in die zentralen Bohrungen bewegt bzw. geschwenkt werden, so dass schließlich der Draht, dessen Drahtende mit dem Nippel in dem Innenraum der Gewindespindel gehalten ist, in axialer Richtung aus der Gewindespindel und dem Gehäuse geführt ist. Der Draht der Bowdenzuganordnung ist in einer Hülle bzw. einem Kabel bewegbar gelagert, wobei sich diese Hülle an einem Ansatz, welcher in axialer Richtung an dem Gehäuse ausgebildet ist, abstützt. Wird der Gewindering gedreht, wird die Gewindespindel mehr oder weniger weit in den Gewindering und in das Gehäuse bewegt, so dass entsprechend der Draht mehr oder weniger weit aus der Hülle der Bowdenzuganordnung herausgezogen wird.

Durch die zuvor beschriebene Ausgestaltung der Verstellvorrichtung gemäß der EP 0 706 338 B1 kann das Einführen des Drahtendes mit dem Nippel und dessen Verankerung in der axial beweglichen Gewindespindel bei vollständig vorgefertigter Bowdenzuganordnung ohne großen Montageaufwand durchgeführt werden. Die Montage der Bowdenzuganordnung an der Verstellvorrichtung ist somit zeit- und kostensparend.

In der EP 0 774 590 B1 ist eine ähnliche Verstellvorrichtung für eine Bowdenzuganordnung gemäß dem Oberbegriff von Anspruch 1 beschrieben, wobei in dieser Druckschrift vorgeschlagen wird, die radiale Öffnung für die Aufnahme des Drahtendes mit dem Nippel der Bowdenzuganordnung in einem Abschnitt des Außengewindes der Gewindespindel derart auszubilden, dass auch dieser Abschnitt bei einem eingehängten bzw. eingehakten Bowdenzug mit dem Innengewinde des anderen Gewindeteils, welches gemäß dieser Druckschrift durch zwei zusammengesetzte und in das Gehäuse eingepresste Halbschalen gebildet ist, verschraubbar ist.

Bei den zuvor beschriebenen herkömmlichen Verstellvorrichtungen kommt es bei einem Verstellen der Gewindespindel zu einer relativ hohen mechanischen Beanspruchung, und es sind hohe Anforderungen in Bezug auf die zu leistende Verstellkraft gestellt. Trotz deutlicher Verbesserungen ist das Montagekonzept und der logistische Materialfluss zur Fertigung der Verstellvorrichtung bzw. der entsprechenden Einzelteile noch relativ aufwändig.

Sowohl gemäß der EP 0 706 338 B1 als auch gemäß der EP 0 774 590 B1 ist die Hülle des Bowdenzugs an einem in axialer Richtung von dem Gehäuse hervorstehenden Ansatz abgestützt.

Gemäß der EP 0 774 590 B1 handelt es sich insbesondere um einen Ansatz, in dessen Mitte die axiale Bohrung für die Durchführung des Drahts des Bowdenzugs ausgebildet ist, wobei der Ansatz durch einen kreis- oder ringförmigen Vorsprung an der Stirnseite der Verstellvorrichtung gebildet ist, welcher durch den Schlitz, der die axiale Bohrung mit der in der Seitenwand des Gehäuses ausgebildeten radialen Öffnung verbindet, unterbrochen ist. Durch diesen Schlitz ist die Widerstandsfestigkeit des ringförmigen Ansatzes gegen Deformation deutlich geschwächt, so dass bei Betätigung der Verstellvorrichtung bzw. des Bowdenzugs mit der Zeit eine Deformation dieses ringförmigen Ansatzes auftreten kann, welche sogar zum Bruch des Ansatzes bzw. zu einer Beschädigung des gesamten Gehäuses führen kann. Da in der Regel die Hülle des Bowdenzugs in den ringförmigen Vorsprung eingesetzt ist, kann es im Laufe der Zeit auch zu einem "Eingraben" der Hülle des Bowdenzugs, das heißt zu einer entsprechenden Deformation der Hülle, kommen.

Zudem sind gemäß der EP 0 774 590 B1 sowohl im Gewindeabschnitt der Halbschalen als auch im Gewindeabschnitt der damit in Gewindeeingriff stehenden Gewindespindel Anschläge ausgebildet, welche die Bewegung der Gewindespindel in beide axiale Richtungen gegenüber den Halbschalen begrenzen. Durch die Ausbildung dieser Anschläge in den Gewindeabschnitten kann es jedoch bei Anwenden einer übermäßigen Verstellkraft zu einer Beschädigung der Gewindeabschnitte kommen. Zudem sind die Anschläge relativ filigran ausgebildet, so dass sie gegebenenfalls einer relativ hohen Verstellkraft nicht widerstehen können. Zudem kann es bei Aufwenden einer entsprechend hohen Verstellkraft zu einem Ineinandergreifen bzw. Verhaken der entsprechenden Anschläge der Gewindespindel und der Halbschalen kommen.

Ein weiteres Problem bei den herkömmlichen Verstellvorrichtungen ist die Fertigung der Gewindespindel. Zur Fertigung der Gewindespindel muss ein entsprechend ausgebildetes Werkzeug die Spindel umfassen, wobei in demjenigen Bereich der Spindel, wo das Werkzeug zur Ausbildung der Gewindespindel schließt, der Gewindegang der schließlich hergestellten Gewindespindel abgeflacht ist. Dies führt jedoch zu einer Beeinträchtigung der Funktionsweise der Gewindespindel, so dass grundsätzlich das Bedürfnis nach einer Gewindespindel besteht, welche sich einerseits einfach herstellen lässt und andererseits dennoch über eine ausreichende Stabilität und Funktionsfähigkeit verfügt.

Die herkömmlichen Verstellvorrichtungen weisen darüber hinaus ein relativ steifes Gehäusedesign auf, wobei die Materialauswahl für die einzelnen Komponenten primär auf die Schnittstelle zwischen dem Gehäuse und dem Bowdenzugeingang abgestellt ist, da hier in der Regel die größten Belastungen auftreten. Die daraus resultierende Materialauswahl kann jedoch für die restlichen Schnittstellen in der Verstellvorrichtung, beispielsweise zwischen der Gewindespindel und den Halbschalen, ungünstig sein.

Darüber hinaus wird gemäß der EP 0 774 590 B1 die Gewindespindel in dem Gehäuse dadurch geführt, dass an ihrem vorderen Ende zwei diametral in radialer Richtung hervorstehende Nasen in entsprechende in axialer Richtung verlaufende Aussparungen oder Nuten in der Gehäusewand eingreifen. Diese Nuten oder Aussparungen sind durch in Umfangsrichtung des Gehäuses verlaufende steg- oder wandartige Vorsprünge, welche von der Innenwand des Gehäuses hervorstehen, begrenzt und führen zu einer Materialanhäufung im Bereich der Führung der Gewindespindel in dem Gehäuse, was kunststofftechnisch problematisch sein kann und zu einem Wirkungsgradverlust beim Verstellen der Gewindespindel führt. Wie beschrieben kann die Verstellvorrichtung manuell mit Hilfe eines Handrads oder Hebels betätigt werden, wobei aufgrund dieser Materialanhäufung im Bereich der Führung der Gewindespindel in dem Gehäuse einmal schwerer und einmal leichter sein kann, was von dem Benutzer entsprechend in Form einer ungleichmäßig aufzubringenden Verstellkraft wahrgenommen wird.

Wie beschrieben ist bei den bekannten Verstellvorrichtungen der an dem eingeführten Drahtende befindliche Nippel in den Innenraum der Gewindespindel eingesetzt. Nach Einsetzen des Nippels verläuft der Draht der Bowdenzuganordnung in axialer Richtung von dem Innenraum der Gewindespindel über die axialen Bohrungen in der Gewindespindel und dem Gehäuse nach außen. Während der Betätigung der Verstellvorrichtung bzw. der Bowdenzuganordnung kann es jedoch zu einer Veränderung der Lage des Nippels innerhalb des Innenraums der Spindel kommen, wobei insbesondere der Nippel auch an der den Innenraum der Gewindespindel begrenzenden Innenwand der Gewindespindel anliegen kann, was zu einer Beeinträchtigung des Wirkungsgrads aufgrund von Reibung führen kann. Darüber hinaus kann durch die Tatsache, dass in diesem Fall die Verstellkraft auf die Bowdenzuganordnung nicht exakt in axialer Richtung übertragen wird, ein Verkippen der Gewindespindel innerhalb des Gehäuses der Verstellvorrichtung die Folge sein, was wiederum den Wirkungsgrad beeinträchtigt und sogar zu einer Beschädigung der Gewindespindel und des Gehäuses führen kann.

Ein generelles Designproblem bei Verstellvorrichtungen der zuvor beschriebenen Art ist auch die Bewerkstelligung eines möglichst ruhigen und gleichmäßigen Laufs der Gewindespindel innerhalb der Verstellvorrichtung. Insbesondere soll zum axialen Verstellen der Gewindespindel eine möglichst gleichmäßige Verstellkraft erforderlich sein, wobei es beim Verstellen der Gewindespindel nicht zu ruckartigen Widerständen kommen sollte. Das Ausbilden von Anschlagkanten unmittelbar in den Gewindeabschnitten der Gewindespindel bzw. der Halbschalen gemäß der EP 0 774 590 B1, insbesondere in Verbindung mit einer seitlichen Abflachung des Gewindegangs der Gewindespindel, kann jedoch zu einem relativ unruhigen Lauf der Gewindespindel führen.

Wie bereits beschrieben stellt auch die Fertigung der Gewindespindel ein spezielles Problem dar. Bei der Fertigung der Gewindespindel wird ein Schieber in das Innere der Spindel eingeschoben, wobei hier eine möglichst konzentrische Lage der Spindel gegenüber dem entsprechenden Werkzeug für eine möglichst filigrane Fertigung der Gewindespindel notwendig ist. Bei herkömmlichen Gewindespindeln ist jedoch das Halten der Spindel während des Einschiebens des Schiebers sowie während der Ausbildung des Außengewindes nicht gewährleistet.

Aus der obigen Beschreibung ist ersichtlich, dass an Verstellvorrichtungen für Bowdenzuganordnungen der zuvor beschriebenen Art eine Vielzahl unterschiedlicher Anforderungen gestellt werden. Diesen unterschiedlichen Anforderungen ist jedoch gemeinsam, einen möglichst ruhigen Lauf der Gewindespindel bei gleichzeitig optimiertem Wirkungsgrad und einfacher Herstellbarkeit der Verstellvorrichtung zu erzielen.

Der vorliegenden Erfindung liegt daher die Aufgabe zu Grunde, die zuvor beschriebenen Probleme zu beseitigen und eine Verstellvorrichtung für eine Bowdenzuganordnung bereitzustellen, bei welcher die Funktionsfähigkeit der Verstellvorrichtung verbessert ist, und bei welcher insbesondere eine möglichst einfache Herstellbarkeit der Verstellvorrichtung bei gleichzeitig verbessertem Wirkungsgrad und verbesserten Verstelleigenschaften der einzelnen Gewindeteilen der Verstellvorrichtung gegeben ist.

Diese Aufgabe wird erfindungsgemäß durch eine Verstellvorrichtung für eine Bowdenzuganordnung mit den Merkmalen des Anspruchs 1 gelöst. Die abhängigen Ansprüche definieren jeweils bevorzugte und vorteilhafte Ausführungsformen der vorliegenden Erfindung.

Die erfindungsgemäße Verstellvorrichtung für eine Bowdenzug- oder Seil-/Kabelzuganordnung, welche auch abhängig von ihrer Ausführungsform als Spann-, Spindel- oder Handschloss bezeichnet werden kann, umfasst ein Gehäuse, ein erstes Gewindeteil, welches in dem Gehäuse drehfest und axial beweglich geführt und mit der Bowdenzuganordnung zu koppeln ist, sowie ein zweites Gewindeteil, welches in dem Gehäuse axialfest und drehbar angeordnet ist und sich mit dem ersten Gewindeteil in Gewindeeingriff befindet. Das erste Gewindeteil kann insbesondere in Form einer Gewindespindel mit einem Außengewinde ausgebildet sein, während das zweite Gewindeteil insbesondere hohlzylinder- oder ringförmig mit einem Innengewinde ausgebildet sein kann. Gemäß einer bevorzugten Ausführungsform umfasst das zweite Gewindeteil mehrere Teilschalen, insbesondere zwei Halbschalen, welche zusammengesetzt das zweite Gewindeteil ergeben und in das Gehäuse einzupressen sind. Selbstverständlich ist jedoch auch eine Umkehrung der Funktionsweise des ersten und zweiten Gewindeteils derart möglich, dass das zweite Gewindeteil in Form einer Gewindespindel und das erste Gewindeteil hohlzylinder- oder ringförmig ausgebildet ist.

Das erste Gewindeteil und das Gehäuse können jeweils in ihrer Seitenwand radiale Öffnungen aufweisen, so dass bei entsprechender Ausrichtung des ersten Gewindeteils gegenüber dem Gehäuse ein Draht der Bowdenzuganordnung bzw. ein an einem Drahtende angebrachter Nippel durch diese Öffnungen in radialer Richtung in das erste Gewindeteil eingefügt werden kann, um die Bowdenzuganordnung bzw. den Draht mit dem ersten Gewindeteil zu koppeln. Hierzu ist in dem ersten Gewindeteil insbesondere ein entsprechend ausgebildeter Innenraum, welcher mit der radialen Öffnung in Verbindung steht, vorgesehen, so dass das Drahtende mit dem Nippel in diesem Innenraum des ersten Gewindeteils zu liegen kommt. Sowohl im ersten Gewindeteil als auch in dem Gehäuse kann zudem an einem Längsende bzw. an den Stirnseiten eine in axialer Richtung verlaufende Öffnung vorgesehen sein, wobei die entsprechende axiale Öffnung mit der jeweiligen radialen Öffnung des ersten Gewindeteils bzw. des Gehäuses über einen in der Seitenwand des Gewindeteils bzw. des Gehäuses ausgebildeten Schlitz in Verbindung steht, so dass nach Einsetzen des Drahtendes mit dem Nippel der Draht der Bowdenzuganordnung entlang der Schlitze derart bewegt werden kann, dass er schließlich in axialer Richtung durch die axialen Öffnungen des ersten Gewindeteils und des Gehäuses nach außen verläuft. Eine Hülle der Bowdenzuganordnung, in welcher der Draht verschiebbar gelagert ist, stützt sich dann vorzugsweise an dem entsprechenden axialen Ende des Gehäuses ab.

Gemäß der vorliegenden Erfindung weist das Gehäuse einen Vorsprung mit der axialen Öffnung zur Aufnahme der Bowdenzuganordnung auf. Als Gegenstück für diesen Vorsprung, welcher insbesondere in axialer Richtung ringförmig von dem entsprechenden Längsende des Gehäuses hervorsteht und durch den zuvor beschriebenen Schlitz unterbrochen ist, ist eine Hülse vorgesehen, welche eine Öffnung zur Aufnahme der Hülle der Bowdenzuganordnung aufweist. Darüber hinaus umfasst die Hülse ein Durchgangsloch, durch welches der Draht der Bowdenzuganordnung in die Öffnung des Vorsprungs des Gehäuses zur Kopplung mit dem ersten Gehäuseteil geführt werden kann. Die Hülse umfasst einen Randabschnitt, welcher den Vorsprung des Gehäuses umgreift.

Die Hülle der Bowdenzuganordnung kann selbst mit einer Hülse, beispielsweise aus Messing, verstärkt und umgeben sein, um das Einführen der Hülle in die erwähnte Öffnung der Hülse zu erleichtern und für eine ausreichende Stabilität zu sorgen. Durch das Umgreifen bzw. Umfassen des Ansatzes durch die zuvor beschriebene Hülse, welche an dem dem Gehäuse zugewandten Abschnitt insbesondere komplementär zur Form des Ansatzes ausgebildet ist, wird vermieden, dass sich der Ansatz bei einer Betätigung der Verstellvorrichtung aufgrund des darin ausgebildeten Schlitzes oder aufgrund von anderen Ursachen verformen kann, dass heißt, die ursprüngliche Form des Ansatzes wird durch diese Hülse gewährleistet, was zu einer verbesserten Stabilität des Ansatzes, des Gehäuses sowie der gesamten Verstellvorrichtung führt. Ein "Eingraben" oder Verziehen der Hülle der Bowdenzuganordnung wird vermieden.

Darüber hinaus wird durch die Hülse bzw. die dadurch gewährleistete Stabilität ermöglicht, dass für jede Komponente der Verstellvorrichtung ein geeignetes Material ausgewählt werden kann, ohne sich auf die Schnittstelle zwischen dem Gehäuse und der Bowdenzuganordnung konzentrieren zu müssen. Für das Gehäuse kann beispielsweise ein Polyamid-Kunststoff mit oder ohne Glasfaseranteil verwendet werden. Für das erste Gewindeteil, welches vorzugsweise in Form einer Gewindespindel ausgebildet ist, kann PBT (Polybutylenterephthalat) verwendet werden, was eine besonders hohe Präzision beim Verstellen der Gewindespindel ermöglicht. Für das zweite Gewindeteil, welches vorzugsweise mehrere Teilschalen umfasst und mit dem ersten Gewindeteil in Gewindeeingriff steht, kann POM (Polyoxymethylen) verwendet werden, wobei es sich bei diesem Kunststoff um einen besonders guten Gleitpartner für PBT handelt. Die Hülse, welche die Hülle der Bowdenzuganordnung aufnimmt und abstützt, kann aus einem glasfaserverstärkten Kunststoff, insbesondere einem Polyamid-Kunststoff mit Glasfaseranteil (beispielsweise Polyamid 6/6.6 mit Glasfaseranteil) gefertigt sein, um für eine ausreichende Stabilität, Festigkeit und darüber hinaus für gute Laufeigenschaften zu sorgen. Es ist somit ersichtlich, dass die Werkstoffauswahl optimiert abhängig von der Funktion des jeweiligen Bauteils erfolgen kann.

Wie beschrieben, dient die zuvor beschriebene Hülse vorzugsweise nicht nur zum Zusammenhalten des Ansatzes an dem Gehäuse, sondern insbesondere auch zum Abstützen der Hülle der Bowdenzuganordnung, so dass die Hülle der Bowdenzuganordnung nicht in die axiale Öffnung des Gehäuseansatzes, sondern in die entsprechende axiale Öffnung der Hülse eingesetzt wird und sich dort abstützt. Diese Öffnung ist durch eine entsprechende Anschlagfläche im Inneren der Hülse begrenzt, welche ein Durchgangsloch für den Draht der Bowdenzuganordnung aufweist, so dass der Draht durch die Hülse in die axiale Öffnung des Ansatzes des Gehäuses der Verstellvorrichtung verlaufen kann.

Die erfindungsgemäße Verstellvorrichtung eignet sich vorzugsweise als Verstellvorrichtung für eine Bowdenzuganordnung zur Verstellung der Wölbung einer Becken- und/oder Lordosenstütze in einer Rückenlehne eines Sitzes, beispielsweise eines Kraftfahrzeugsitzes. Die erfindungsgemäße Verstellvorrichtung ist jedoch nicht auf diesen bevorzugten Anwendungsbereich beschränkt und kann darüber hinaus sowohl manuell als auch elektrisch betätigt werden.

Die vorliegende Erfindung wird nachfolgend näher unter Bezugnahme auf die Zeichnung anhand eines bevorzugten Ausführungsbeispiels erläutert.
Figur 1 und Figur 2 zeigen perspektivische Ansichten einer Verstellvorrichtung für eine Bowdenzuganordnung gemäß einem bevorzugten Ausführungsbeispiel der Erfindung im zusammengebauten Zustand,
Figur 3 zeigt eine Draufsicht auf die Verstellvorrichtung von oben im zusammengebauten Zustand,
Figur 4 zeigt eine Draufsicht auf die Verstellvorrichtung von unten im zusammengebauten Zustand,
Figur 5 zeigt eine Vorderansicht der Verstellvorrichtung im zusammengebauten Zustand,
Figur 6 zeigt eine Seitenansicht der Verstellvorrichtung im zusammengebauten Zustand,
Figur 7 zeigt eine perspektivische Ansicht eines Gehäuses der Verstellvorrichtung von Figur 1-6,
Figur 8 zeigt eine Draufsicht auf das Gehäuse von oben,
Figur 9 zeigt eine Draufsicht auf das Gehäuse von unten,
Figur 10 zeigt eine Vorderansicht des Gehäuses,
Figur 11 zeigt eine Seitenansicht des Gehäuses,
Figur 12 zeigt eine Draufsicht auf eine Hülse für die Verstellvorrichtung von Figur 1 - Figur 6 von unten,
Figur 13 zeigt eine Seitenansicht der Hülse,
Figur 14 zeigt eine Draufsicht auf die Hülse von oben,
Figur 15 zeigt eine perspektivische Ansicht der Hülse,
Figur 16 zeigt eine perspektivische Ansicht einer Halbschale der Verstellvorrichtung von Figur 1 - Figur 6,
Figur 17 zeigt eine Vorderansicht der Halbschale,
Figur 18 zeigt eine Seitenansicht der Halbschale,
Figur 19 zeigt eine Draufsicht auf die Halbschale von oben,
Figur 20 zeigt eine Draufsicht auf die Halbschale von unten,
Figur 21 zeigt eine Vorderansicht einer Gewindespindel der Verstellvorrichtung von Figur 1 - Figur 6,
Figur 22 zeigt eine perspektivische Ansicht der Gewindespindel,
Figur 23 zeigt eine Rückansicht der Gewindespindel,
Figur 24 zeigt eine Seitenansicht der Gewindespindel,
Figur 25 zeigt eine Draufsicht auf die Gewindespindel von unten, und
Figur 26 zeigt eine Draufsicht auf die Gewindespindel von oben.

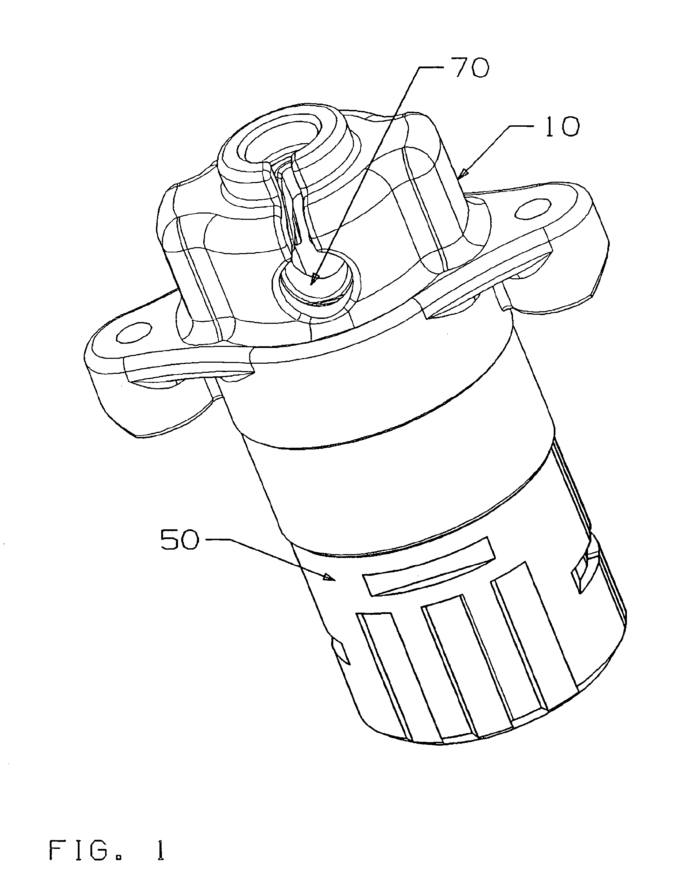

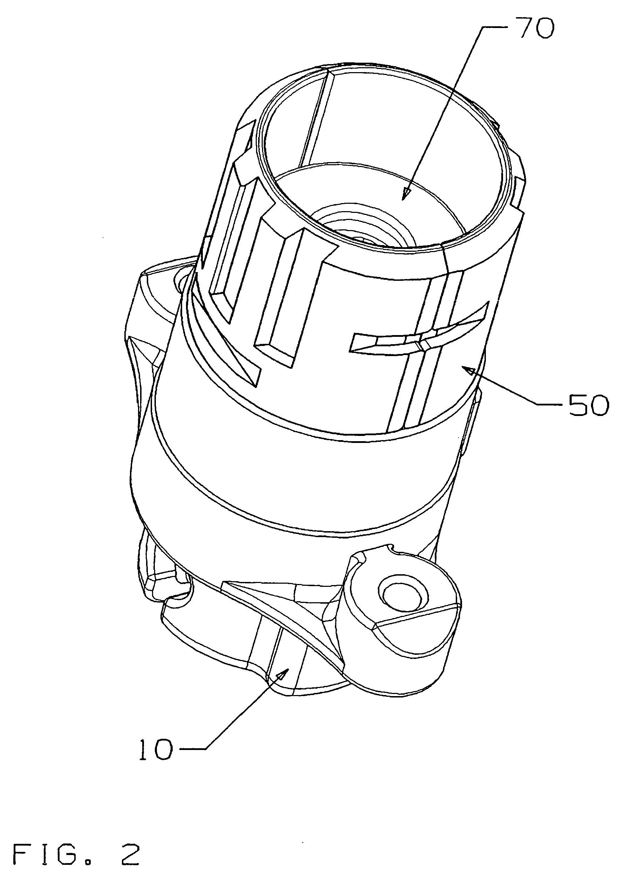

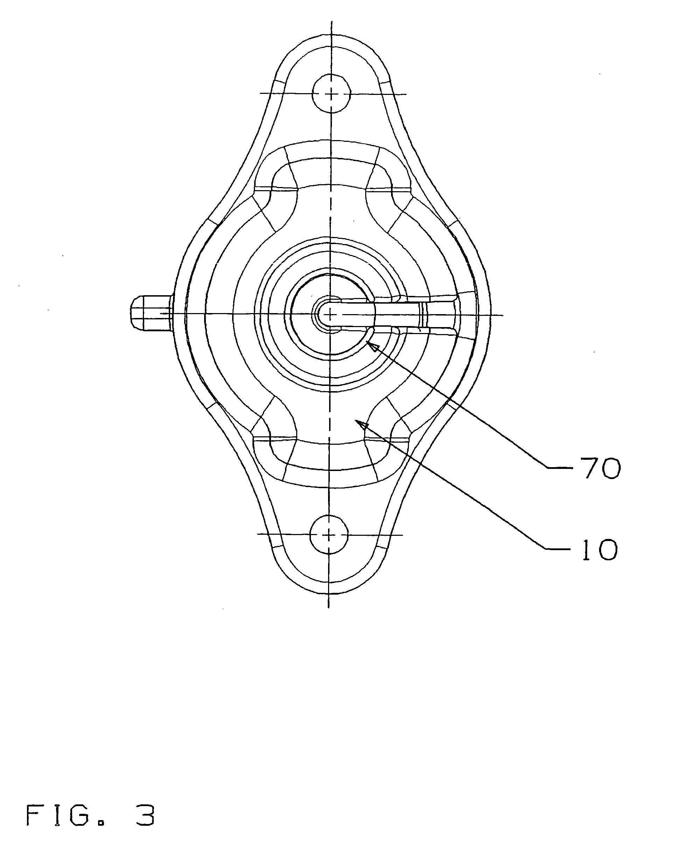

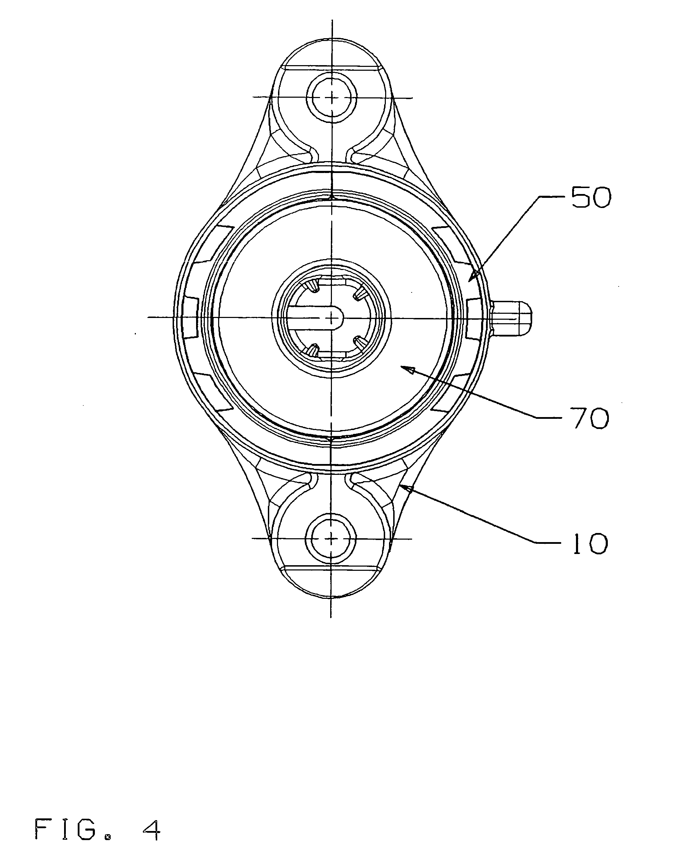

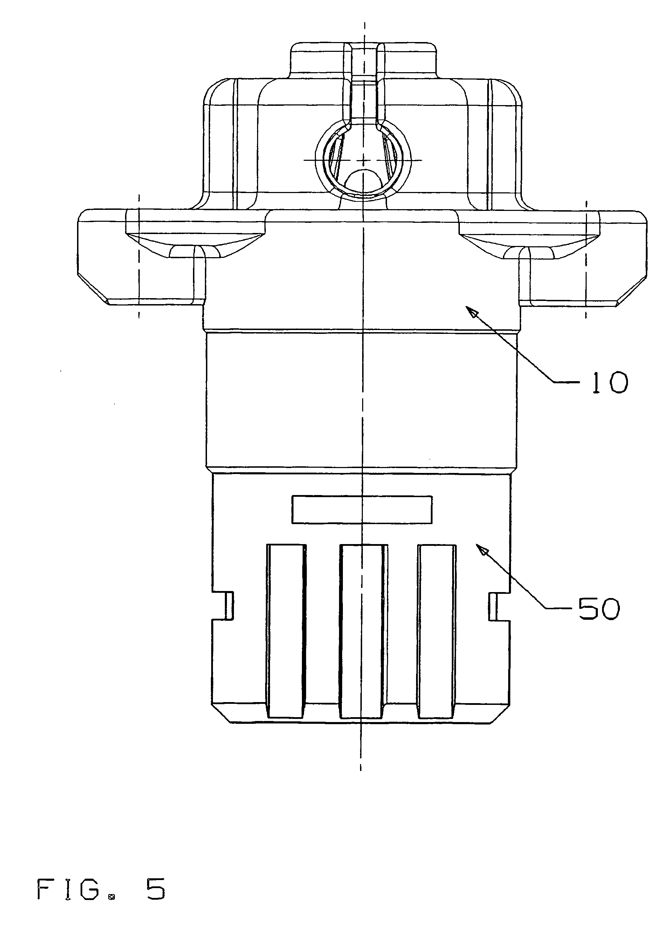

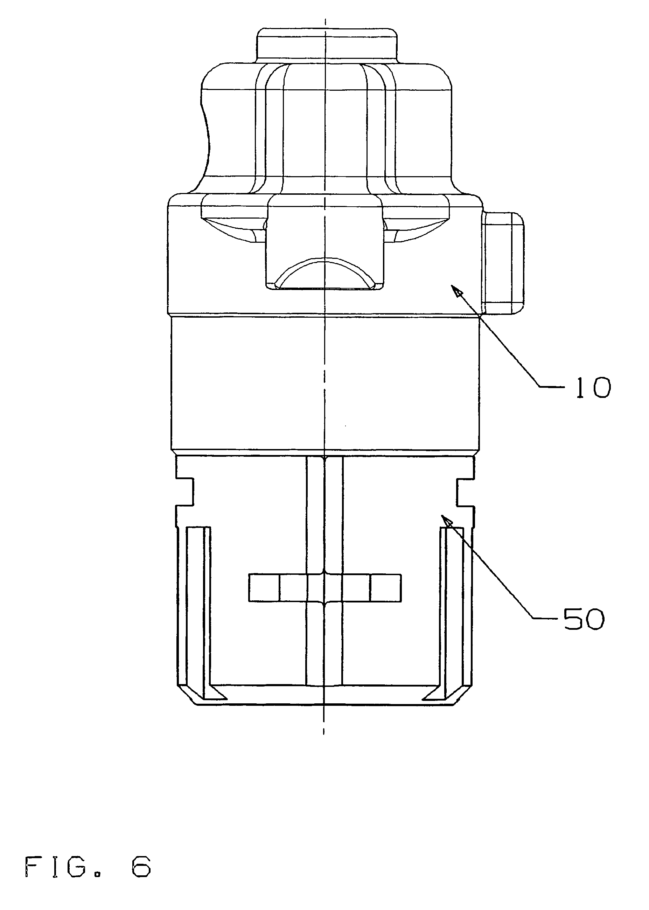

Die in Figur 1 - Figur 6 dargestellte Verstellvorrichtung dient zum Verstellen einer (nicht gezeigten) Bowdenzuganordnung, genauer gesagt eines in einer Hülle der Bowdenzuganordnung verschiebbar gelagerten Drahts. Die wesentlichen Bestandteile der Verstellvorrichtung, welche auch als Spindel- oder Spannschloss bzw. bei manueller Betätigung als Handschloss bezeichnet werden kann, sind ein Gehäuse 10, zwei Halbschalen 50, welche im zusammengesetzten Zustand einen hohlzylinderförmigen Körper bilden, und eine Gewindespindel 70. Die beiden Halbschalen 50 sind in dem Gehäuse 10 axialfest und drehbar angeordnet, während die Gewindespindel 70 in dem Gehäuse drehfest und axial beweglich geführt ist. Die Gewindespindel 70 ist mit der Bowdenzuganordnung bzw. dem Draht der Bowdenzuganordnung zu koppeln, so dass abhängig von der axialen Bewegung der Gewindespindel 70 innerhalb des Gehäuses 10 und innerhalb der Halbschalen 50 der Draht der Bowdenzuganordnung mehr oder weniger weit in das Gehäuse 10 hineingezogen wird. Dieser Sachverhalt kann beispielsweise ausgenutzt werden, um eine mit dem anderen Ende des Drahts der Bowdenzuganordnung gekoppelte Lordosenstütze in ihrer Wölbung zu verstellen. Diesbezüglich sind bereits verschiedene Lösungen zur Verstellung der Wölbung einer Lordosenstütze mittels einer Bowdenzuganordnung aus dem Stand der Technik bekann, so dass an dieser Stelle nicht näher darauf eingegangen werden muss.

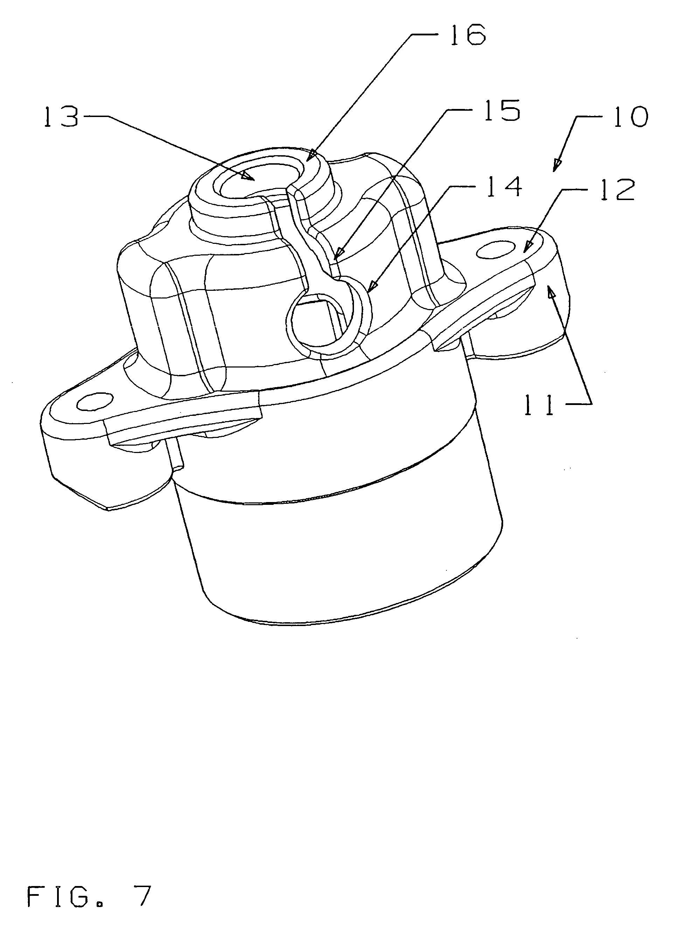

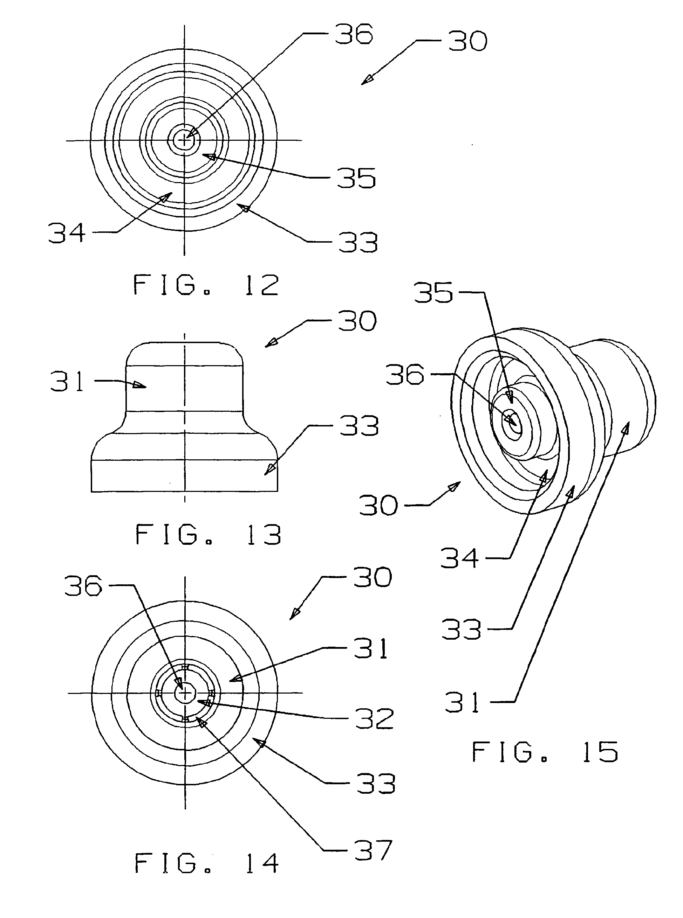

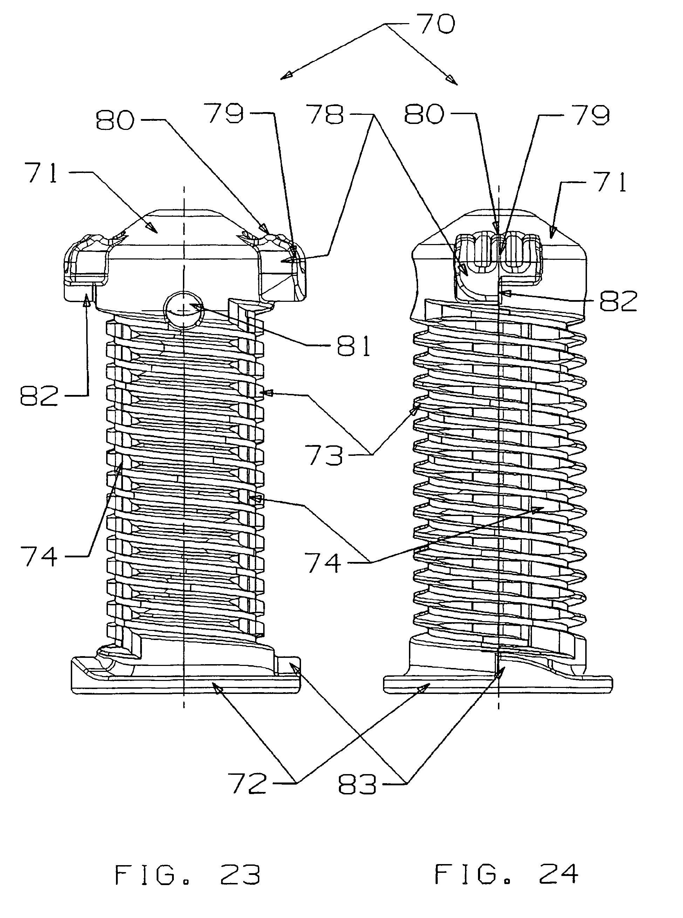

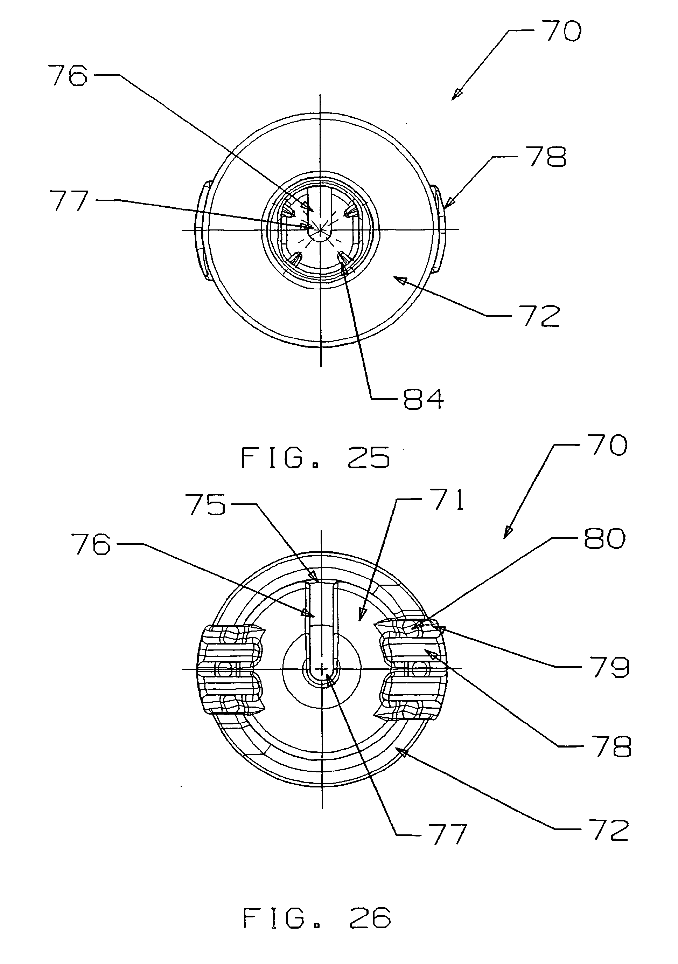

Der in Figur 1 - Figur 6 dargestellten Verstellvorrichtung ist darüber hinaus eine in diesen Figuren nicht dargestellte Hülse zugeordnet, welche im Detail in Figur 12 - Figur 15 gezeigt und auf einen im Wesentlichen ringförmigen Ansatz des Gehäuses 10 aufzusetzen ist. Die einzelnen Bestandteile der Verstellvorrichtung von Figur 1 - Figur 6 sowie die Hülse werden nachfolgend näher unter Bezugnahme auf Figur 7 - Figur 26 erläutert.

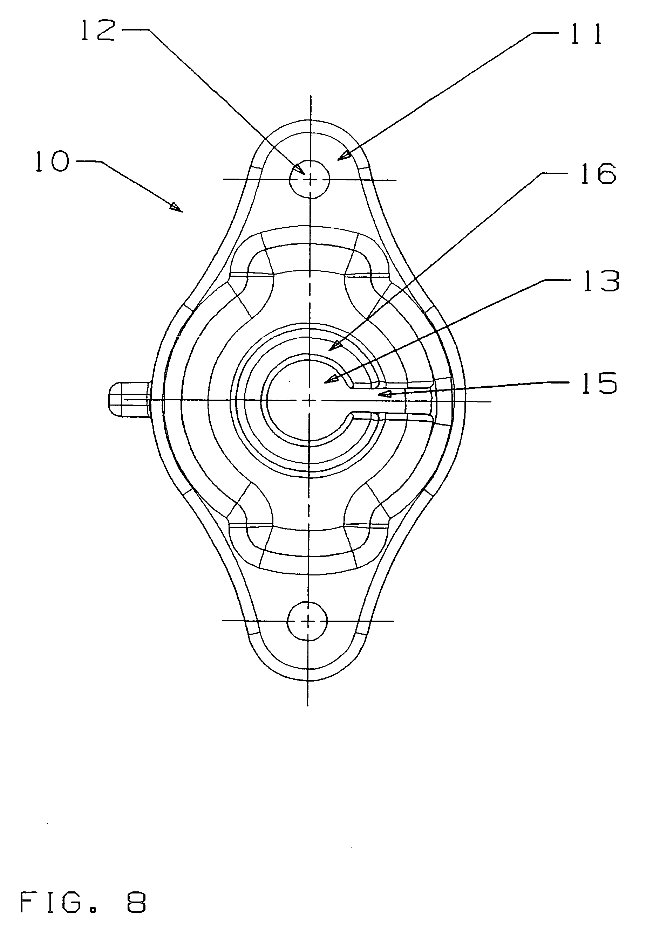

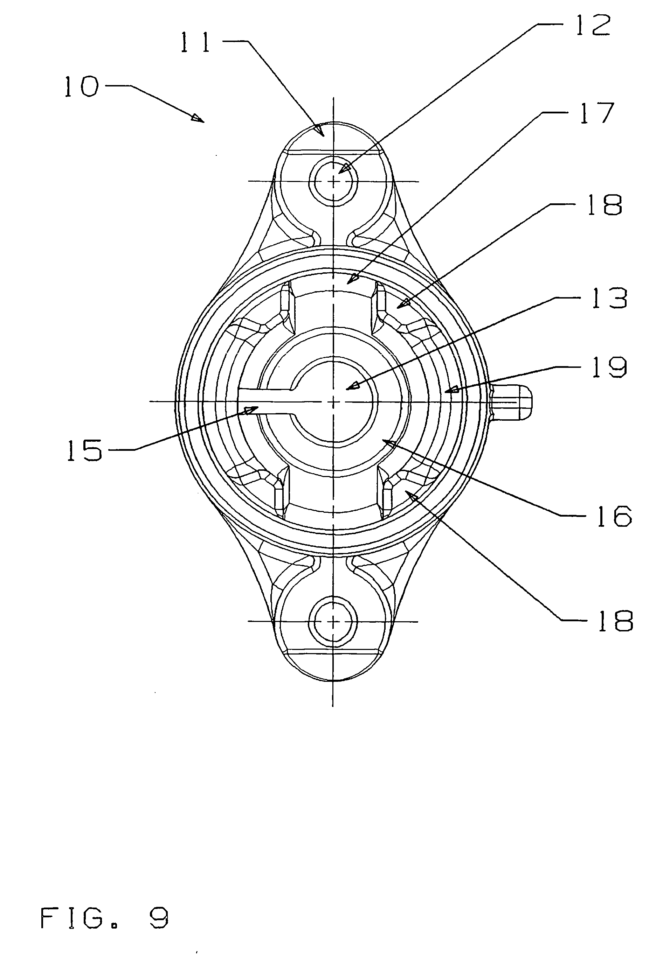

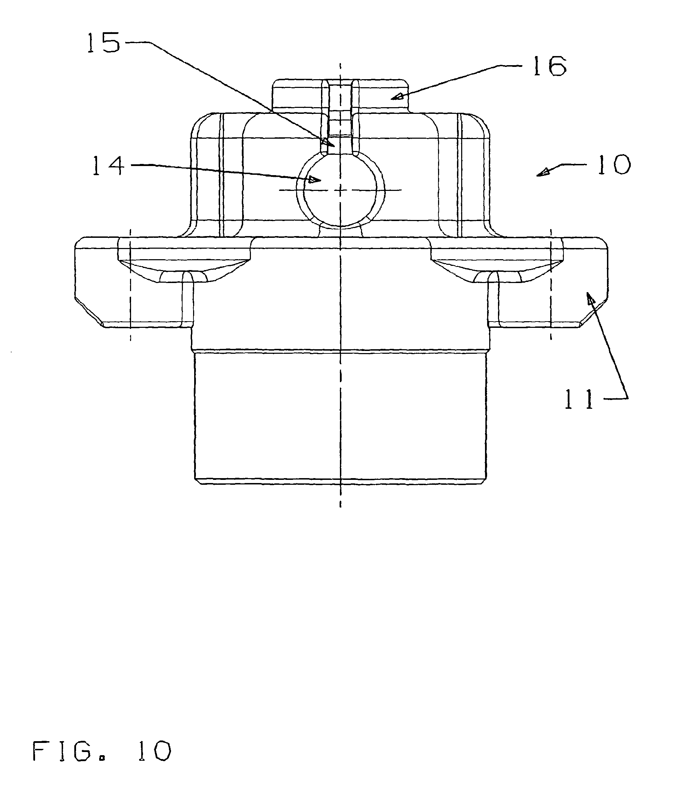

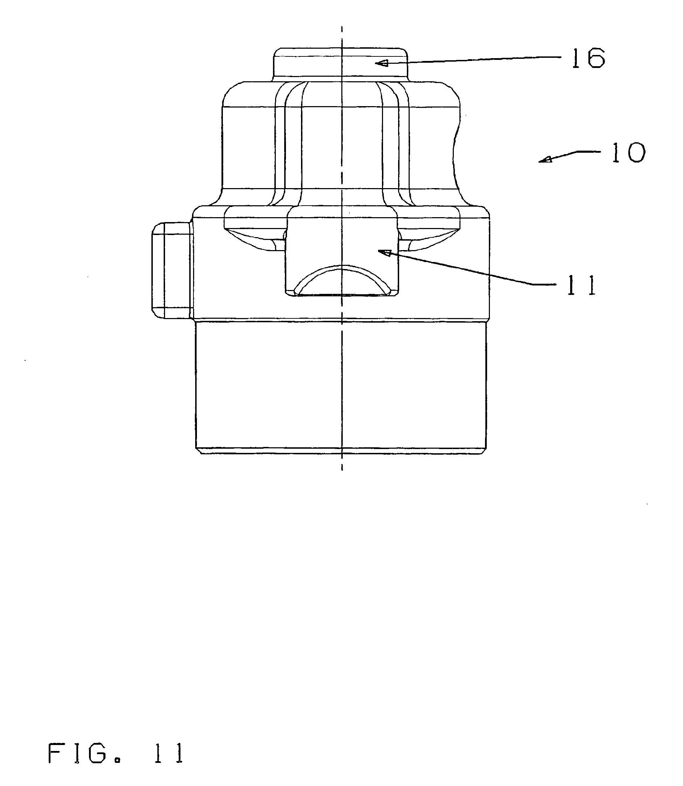

Figur 7 zeigt eine perspektivische Ansicht des Gehäuses 10, während Figur 8 eine Draufsicht auf das Gehäuse 10 von oben, Figur 9 eine Draufsicht auf das Gehäuse 10 von unten, Figur 10 eine Vorderansicht des Gehäuses 10 und Figur 11 eine Seitenansicht des Gehäuses 10 darstellen.

Das Gehäuse 10 ist einteilig aus einem Polyamid-Kunststoff, gegebenenfalls mit Glasfaseranteil, gefertigt. Das Gehäuse 10 besitzt eine im Wesentlichen hohlzylindrische Form, wobei von der Seitenwand des Gehäuses 10 zwei flanschartige Vorsprünge 11 mit Befestigungslöchern 12 ausgebildet sind, welche diametral von der Seitenwand des Gehäuses 10 nach außen hervorstehen. Mit Hilfe dieser flanschartigen Vorsprünge 11 bzw. der darin ausgebildeten Befestigungslöcher 12 kann das Gehäuse 10 (mit den darin befindlichen Halbschalen 50, der darin befindlichen Gewindespindel 70 und der auf das Gehäuse 10 aufgesetzten Hülse 30) an einem gewünschten Objekt, beispielsweise einem Kraftfahrzeugsitz, befestigt werden. In der Seitenwand des Gehäuses 10 ist darüber hinaus eine radiale Öffnung 14 ausgebildet, welche über einen in der Seitenwand ebenfalls ausgebildeten Schlitz 15 mit einer axialen Öffnung 13 des Gehäuses 10 in Verbindung steht. Die axiale Öffnung 13 des Gehäuses 10 ist durch einen ringförmigen Ansatz 16 definiert, welcher in axialer Richtung von der Stirnfläche bzw. der axialen Endfläche des Gehäuses 10 hervorsteht. Der Schlitz 15 verläuft auch durch diesen ringförmigen Ansatz oder Vorsprung 16.

Die radiale Öffnung 14 dient dazu, um einen an dem entsprechenden Drahtende der Bowdenzuganordnung angebrachten Nippel durch diese radiale Öffnung 14 einzuführen, wobei anschließend der Draht der Bowdenzuganordnung durch den Schlitz 15 in die axiale Öffnung 13 bewegt wird, so dass der Draht vom Inneren des Gehäuses 10 durch die axiale Öffnung 13 in Längsrichtung des Gehäuses 10 nach außen verläuft.

Die in Figur 9 gezeigte Draufsicht auf das Gehäuse 10 von unten macht deutlich, dass im Inneren des Gehäuses 10 Vorsprünge 18 ausgebildet sind, welche von der Innenwand des Gehäuses 10 in radialer Richtung hervorstehen. Diese Vorsprünge 18 definieren in Längsrichtung verlaufende Führungsnuten 17, in welche nasenartige Vorsprünge 78 der Gewindespindel 70 eingesetzt werden können, um die Gewindespindel 70 in Längsrichtung entlang dieser Führungsnuten 17 innerhalb des Gehäuses 10 bewegen zu können.

Aus Figur 9 ist auch ersichtlich, dass die in Umfangsrichtung des Gehäuses 10 jeweils benachbarten radialen Vorsprünge 18 nicht über ihre gesamte axiale Länge miteinander in Umfangsrichtung verbunden sind. Stattdessen sind zwischen jeweils zwei in Umfangsrichtung benachbarten radialen Vorsprüngen 18 Materialaussparungen 19 vorgesehen, wobei diese Materialaussparungen 19 sich lediglich teilweise über die axiale Länge der radialen Vorsprünge 18 oder auch über die gesamte axiale Länge der radialen Vorsprünge 18 erstrecken können, wobei im letztgenannten Fall die in Umfangsrichtung des Gehäuses 10 benachbarten radialen Vorsprünge 18 vollständig voneinander entlang ihrer gesamten axialen Länge getrennt sind. Durch diese Materialaussparungen 19, welche somit verhindern, dass sich die radialen Vorsprünge 18 ring- oder wandartig über eine größere Fläche der Innenwand des Gehäuses 10 erstrecken, ist gewährleistet, dass überschüssiges Material im Bereich der Führung der Gewindespindel 70 weggelassen wird, um unnötige Materialansammlungen, welche kunststofftechnisch problematisch sein können, zu vermeiden. Unabhängig von den daraus resultierenden billigeren Herstellungskosten tritt hierdurch auch eine Wirkungsgradverbesserung ein, da durch unnötige Materialansammlungen im Bereich der Führung der Gewindespindel 70 es häufig zu Widerständen beim Einführen der Gewindespindel 70 bzw. der entsprechenden nasenartigen Vorsprünge 78 in die Führungsnuten 17 kommen kann.

Bei dem in Figur 9 gezeigten Ausführungsbeispiel sind die radialen Vorsprünge 18, welche die axialen Führungsnuten 17 definieren, im Querschnitt im Wesentlichen trapezförmig. Im Prinzip können jedoch die Vorsprünge 18 jede beliebige Form aufweisen und auch mit einer geringeren Dicke ausgestaltet sein, solange eine zuverlässige Führung der Gewindespindel 70 in den Führungsnuten 17 gewährleistet ist. Des Weiteren genügt es, wenn die radialen Vorsprünge 18 im Bereich des stirnseitigen Endabschnitts des Gehäuses 10 im Inneren desselben ausgebildet sind, da die Gewindespindel 70 - wie nachfolgend noch näher erläutert wird - am entgegengesetzten Längsende des Gehäuses 10 ausreichend durch die Halbschalen 50 gehalten ist.

Nachfolgend soll näher die in Figur 12 - Figur 15 dargestellte Hülse, welche auf den ringförmigen Ansatz bzw. Vorsprung 16 des Gehäuses 10 aufzusetzen ist, erläutert werden. Dabei zeigt Figur 12 eine Draufsicht auf die Hülse 30 von unten, Figur 13 zeigt eine Seitenansicht der Hülse 30, Figur 14 zeigt eine Draufsicht auf die Hülse 30 von oben, und Figur 15 zeigt eine perspektivische Ansicht der Hülse 30.

Die Hülse 30 umfasst im Wesentlichen einen Aufnahmeabschnitt 31 und einen Basis- oder Randabschnitt 33, welche an den beiden Längsenden der Hülse 30 ausgebildet sind. Die Hülse 30 ist zu ihrer Längsmittelachse im Wesentlichen rotationssymmetrisch und glockenförmig aufgebaut.

Der Aufnahmeabschnitt 31 weist eine in Längsrichtung verlaufende Öffnung auf, in welche die Hülle der Bowdenzuganordnung einzuführen ist. Die Abmessungen der Öffnung 32 entsprechen dabei im Wesentlichen den Abmessungen der Hülle der Bowdenzuganordnung, wobei darüber hinaus - wie aus Figur 14 ersichtlich ist - von der Innenwand gleichmäßig in Umfangsrichtung angeordnete Rippen in radialer Richtung hervorstehen können, um die Hülle der Bowdenzuganordnung in der Öffnung 32 zu fixieren.

Wie aus Figur 15 ersichtlich ist, erstreckt sich vom unteren Ende des Aufnahmeabschnitts 31 in Längsrichtung ein ringförmiger Vorsprung 35, wobei im mittleren Bereich dieses ringförmigen Vorsprungs 35 ein Durchgangsloch 36 ausgebildet ist, durch welches der in der Hülle bewegbar gelagerte Draht geführt werden kann. Die dem Aufnahmeabschnitt 31 zugewandte Oberfläche des ringförmigen Vorsprungs 35 dient zugleich als Anschlagfläche für die Hülle der Bowdenzuganordnung, das heißt die Hülle kann in die Öffnung 32 bis zum Boden der ringförmigen Vertiefung 35 eingeführt werden.

Der Randabschnitt 33 der Hülse 30 ist - wie ebenfalls aus Figur 15 ersichtlich ist - im Wesentlichen ringförmig und von dem ringförmigen Vorsprung 35 durch eine ebenfalls im Wesentlichen ringförmige Vertiefung oder Nut 34 getrennt. Die Form und die Abmessungen der Vertiefung 34 sind dabei im Wesentlichen komplementär zu der Form und der Vertiefung des ringförmigen Vorsprungs 16 des Gehäuses 10 gewählt. Im Gegensatz zu dem ringförmigen Vorsprung 16 des Gehäuses 10 ist jedoch der ebenfalls im Querschnitt im Wesentlichen kreisförmige Randabschnitt 33 geschlossen. Auch der ringförmige Vorsprung 35 und die ringförmige Vertiefung 34 sind im Querschnitt im Wesentlichen kreisförmig.

In der Praxis wird die Hülle der Bowdenzuganordnung in die Öffnung 32 des Aufnahmeabschnitts 31 der Hülse 30 eingeführt, und der Draht der Bowdenzuganordnung wird durch das Durchgangsloch 36 geführt. Anschließend wird das entsprechende Drahtende mit dem daran angebrachten Nippel wie beschrieben durch die radiale Öffnung 14 in der Seitenwand des Gehäuses 10 (sowie eine in der Gewindespindel 70 entsprechend ausgebildete radiale Öffnung 75, welche nachfolgen noch näher erläutert wird) eingeführt und dort mit der Gewindespindel 70 gekoppelt. Der Draht wird anschließend durch den Schlitz 15 in der Seitenwand des Gehäuses 10 (und einen entsprechend ausgebildeten Schlitz 76 in der Seitenwand der Gewindespindel 70) in die axiale Öffnung 13 des Gehäuses 10 (und eine entsprechend ausgebildete axiale Öffnung 77 der Gewindespindel 70) bewegt, so dass er in Längsrichtung des Gehäuses 10 und der Gewindespindel 70 verläuft. Anschließend wird die Hülse 30 auf den axialen Vorsprung 16 des Gehäuses 10 geschoben oder aufgesetzt, wobei der Randabschnitt 33 sowie die durch den ringförmigen Vorsprung 35 und den Randabschnitt 33 definierte ringförmige Vertiefung 34 derart ausgebildet sind, dass der axiale Vorsprung 16 des Gehäuses 10 möglichst exakt in diese ringförmige Vertiefung 34 der Hülse 30 passt und zwischen dem Randabschnitt 33 und dem ringförmigen Vorsprung 35 der Hülse 30 formschlüssig gehalten wird. Insbesondere umgibt der Randabschnitt 33 vollständig den axialen Vorsprung 16 des Gehäuses 10, so dass auch bei Anwenden größerer Verstellkräfte auf die Bowdenzuganordnung und demzufolge auch auf die Hülle der Bowdenzuganordnung der in dem Vorsprung 16 ausgebildete Schlitz 15 zusammengehalten wird und sich nicht ausweiten kann. Der axiale Vorsprung 16 des Gehäuses 10 ist somit gegen Deformation geschützt. Ebenso kann ein "Eingraben" oder Verziehen der Hülle der Bowdenzuganordnung zuverlässig vermieden werden, da die Hülle der Bowdenzuganordnung wie beschrieben in der Öffnung 32 des Aufnahmeabschnitts 31 der Hülse 30 befindlich ist und dort ebenfalls formschlüssig durch die Innenwand der Öffnung 32 bzw. die dort ausgebildeten radialen Rippen 37 und die im Wesentlichen senkrecht zur Längsachse der Hülse 30 verlaufende Anschlagfläche am Boden des ringförmigen Vorsprungs 35 gehalten ist.

Die Hülse 30 kann wie das Gehäuse 10 aus einem Polyamid-Kunststoff, beispielsweise Polyamid 6/6.6, gefertigt sein, wobei die Hülse vorzugsweise glasfaserverstärkt sein sollte, um die Stabilität und Festigkeit der Hülse 30 zu verbessern.

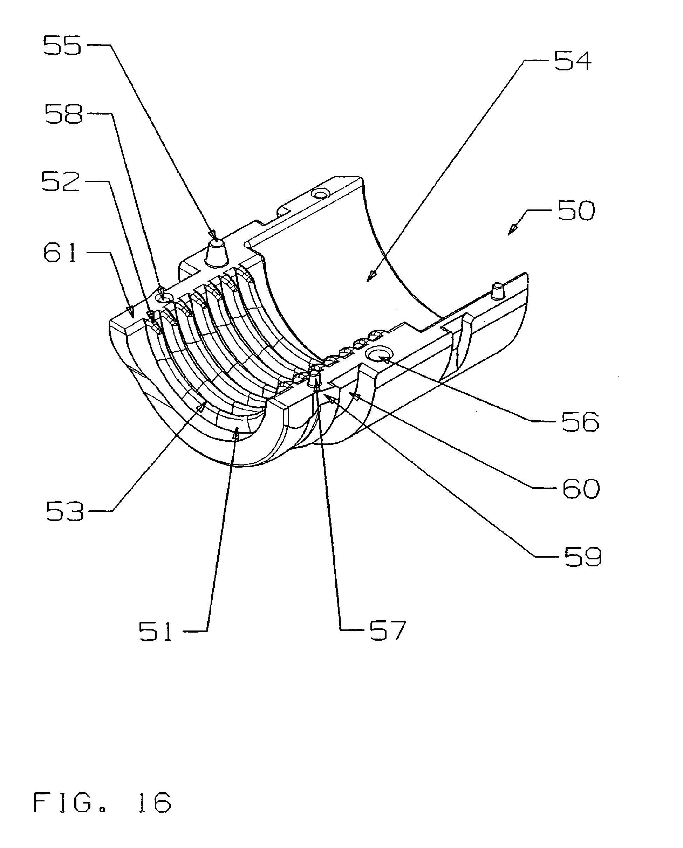

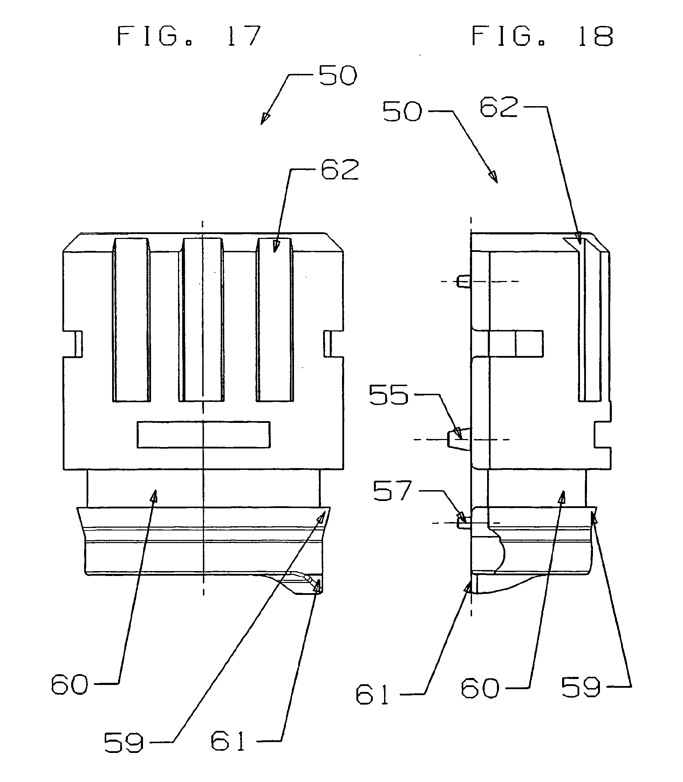

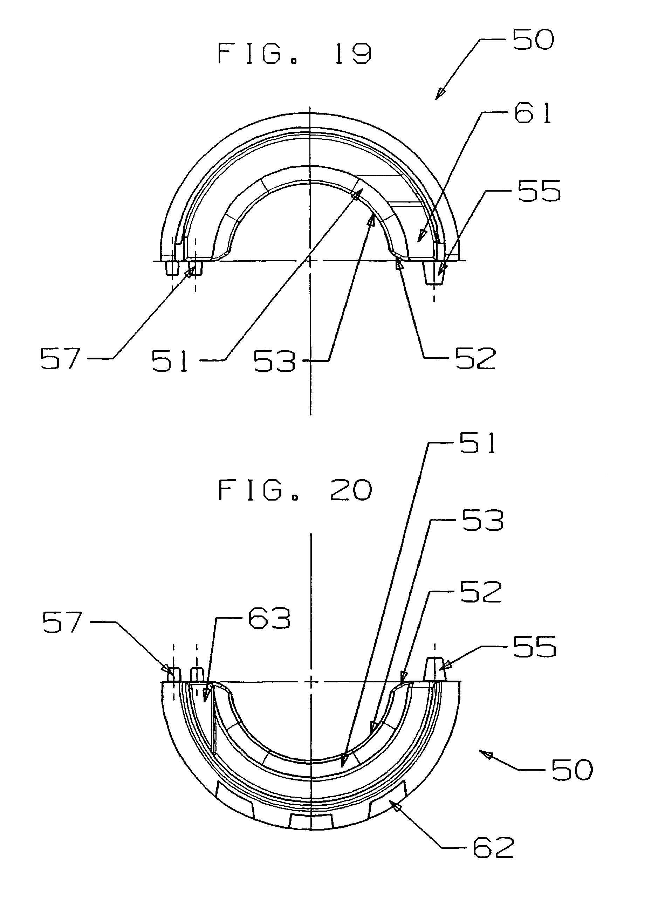

Nachfolgend werden die beiden Halbschalen 50 der in Figur 1 - Figur 6 gezeigten Verstellvorrichtung näher erläutert. Dabei ist in Figur 16 eine perspektivische Ansicht einer der Halbschalen 50 dargestellt, während Figur 17 eine Vorderansicht der Halbschale 50, Figur 18 eine Seitenansicht der Halbschale 50, Figur 19 eine Draufsicht auf die Halbschale 50 von oben, und Figur 20 eine Draufsicht auf die Halbschale 50 von unten darstellt.

Wie aus Figur 16 ersichtlich ist, ist jede der beide Halbschalen 50 im Wesentlichen halbzylinderförmig und weist an ihrem einen Längsende einen Abschnitt mit einem Innengewinde 51 und an ihrem anderen Längsende einen Hohlraum 54 auf, in dem eine nachfolgend noch näher erläuterte Basis 72 der Gewindespindel 70 in axialer Richtung geführt ist. Das Innengewinde jeder Halbschale 50 ist - wie aus Figur 16 ersichtlich ist - sowohl in radialer Richtung mit Abrundungen 53 als auch seitlich im Bereich der Trennflächen mit Abrundungen 52 versehen. Werden die beiden Halbschalen 50 an ihren Trennflächen zusammengesetzt, ermöglichen die Abrundungen bzw. Radien 52, 53 einen runden Lauf der Gewindespindel 70 innerhalb der Halbschalen 50, wobei insbesondere durch die im Bereich der Trennflächen vorgesehenen seitlichen Abrundungen 52 ein scharfer Übergang zwischen den Innengewindeabschnitten der beiden Halbschalen 50 vermieden wird, so dass die Gewindespindel 70 ohne wesentlichen Widerstand in die Halbschalen 50 und das Gehäuse 10 eingeschraubt bzw. herausgeschraubt werden kann.

Jede Trennfläche jeder Halbschale 50 weist eine Kombination aus einem Vorsprung und einer Vertiefung auf. Dabei ist aus Figur 16 ersichtlich, dass die eine Trennfläche jeder Halbschale 50 einen relativ großen Vorsprung 55 aufweist, während die andere Trennfläche einen relativ kleinen Vorsprung 57 besitzt. Darüber hinaus weist die erstgenannte Trennfläche eine Vertiefung 58 zur Aufnahme des relativ kleinen Vorsprungs 57 der anderen Halbschale auf, während die andere Trennfläche jeder Halbschale 50 benachbart zu dem relativ kleinen Vorsprung 57 eine Vertiefung 56 zur Aufnahme des relativ großen Vorsprungs 55 der anderen Halbschale 50 besitzt. Die Reihenfolge zwischen Vorsprung und Vertiefung ist auf beiden Trennflächen jeder Halbschale 50 vertauscht, so dass bei Zusammensetzen der beiden Halbschalen 50 die beiden Halbschalen 50 sicher zueinander in Position gehalten werden können und den geschlossenen hohlzylindrischen Körper zur Aufnahme der Gewindespindel 70 bilden. Die Vorsprung-Vertiefung-Kombinationen 55, 58 bzw. 57, 56 an den beiden Trennflächen jeder Halbschale 50 sind insbesondere im Bereich der Innengewindeabschnitte 51 ausgebildet, so dass die beiden Halbschalen 50 insbesondere im Bereich des Innengewindes sicher zusammengehalten werden.

Von der Außenwand der beiden Halbschalen 50 steht ein in Umfangsrichtung umlaufender Vorsprung 59 radial hervor, welcher bei Hineindrücken der zusammengesetzten Halbschalen 50 in das Gehäuse 10 in eine entsprechende (nicht gezeigte) in Umfangsrichtung umlaufende Ausnehmung in der Innenwand des Gehäuses 10 einrastet und somit die Halbschalen 50 axialfest, jedoch drehbar in dem Gehäuse 10 hält.

Dabei ist aus Figur 16 auch ersichtlich, dass bei einem Drehen der Halbschalen 50 ein dadurch auf die Halbschalen 50 ausgeübtes Kippmoment nur noch im Bereich dieses umlaufenden radialen Vorsprungs 59 am äußeren Ende der Halbschalen 50 in dem Gehäuse 10 abgefangen wird. Ansonsten kann der Grenzbereich zu dem Gehäuse 10 komplett als Reibfläche genutzt werden, was insbesondere deshalb vorteilhaft ist, da dann eine Trennkante für ein entsprechendes Fertigungswerkzeug nicht mehr exakt auf der Reibfläche verlaufen muss, da hierzu ein größerer Freiraum 60 zur Verfügung steht.

Die Halbschalen 50 können aus Polyoxymethylen (POM) gefertigt sein, welches ein sehr guter Gleitpartner für Polybutylenterephthalat (PBT) ist, aus dem die Gewindespindel 70 vorzugsweise gefertigt ist. PBT ermöglicht beim Verstellen der Gewindespindel 70 in den Halbschalen 50 eine sehr hohe Präzision.

Wie aus Figur 17 und Figur 18 ersichtlich ist, weisen die Halbschalen 50 an der Außenseite ihres Längsendes im Bereich des Hohlraums 54 (vgl. Figur 16) Aussparungen oder Rillen 62 auf, welche zur Befestigung bzw. zum Aufpressen eines (nicht gezeigten) Handrads dienen. Wie bereits erläutert worden ist, werden die beiden Halbschalen 50 nach Einsetzen der Gewindespindel 70 zusammengefügt, um anschließend die Halbschalen 50 mit der darin befindlichen Gewindespindel 70 in das Gehäuse 10 hineinzudrücken und dort zu verrasten. Die Halbschalen 50 werden in diesem Fall axialfest, jedoch drehbar in dem Gehäuse 10 gehalten, während die Gewindespindel 70 über ihr Außengewinde 73 mit dem Innengewinde 53 der Halbschalen 50 in Gewindeeingriff steht und demzufolge in den Halbschalen 50 und in dem Gehäuse 10 in axialer Richtung verschiebbar ist. Nachdem jedoch die nasenartigen Vorsprünge 78 der Gewindespindel 70 in die Führungsnuten 17 des Gehäuses 10 eingreifen, ist die Gewindespindel 70 in dem Gehäuse 10 drehfest gelagert. Dies hat zur Folge, dass bei einem Verdrehen der Halbschalen 50 mit Hilfe des zuvor beschriebenen Handrads die Gewindespindel 70 abhängig von dem Drehsinn und abhängig von dem Umfang der Drehung mehr oder weniger weit in die Halbschalen 50 und in das Gehäuse 10 hinein oder herausbewegt wird. Nachdem die Gewindespindel 70 mit dem Nippel am Drahtende der Bowdenzuganordnung gekoppelt ist, hat dies zur Folge, dass abhängig vom Drehsinn und vom Umfang der Drehung des Handrads bzw. der Halbschalen 50 der Draht der Bowdenzuganordnung mehr oder weniger weit aus der sich in der Hülse 30 an dem Gehäuse 10 abstützenden Hülle der Bowdenzuganordnung in das Gehäuse 10 hineingezogen wird.

Die Relativbewegung der Gewindespindel 70 gegenüber den Halbschalen 50 ist dabei in beiden Längsrichtungen durch entsprechend ausgestaltete Anschläge begrenzt, welche nachfolgend näher erläutert werden sollen.

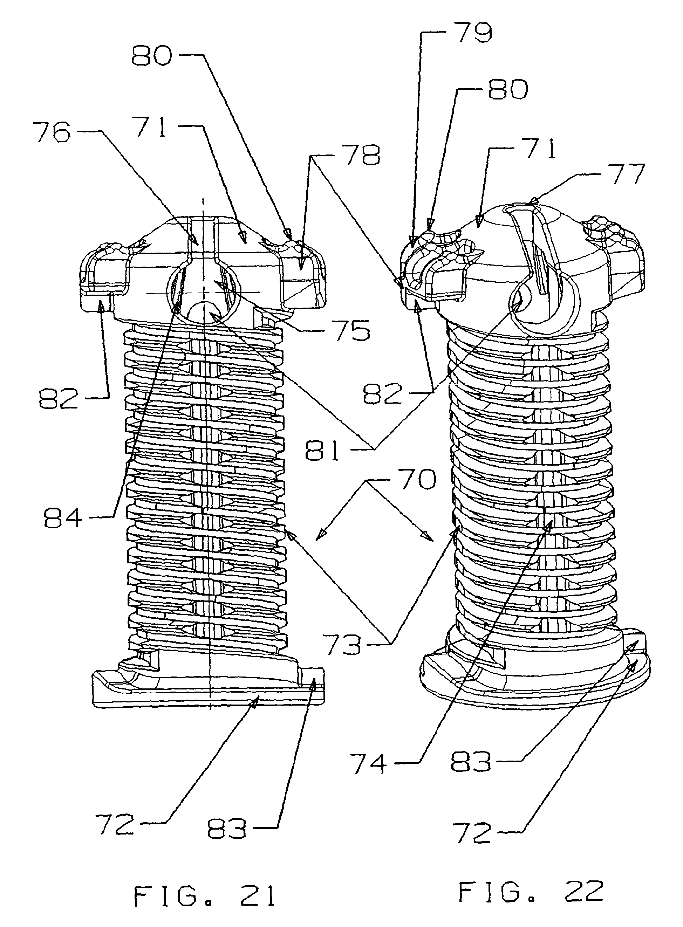

Wie aus den Darstellungen der Gewindespindel in Figur 21 - Figur 26 ersichtlich ist, umfasst die Gewindespindel 70 neben dem eigentlichen Spindelkörper mit dem bereits erwähnten Außengewinde 73 einen am oberen Ende angeordneten gewindefreien Spindelkopf 71 sowie eine am unteren Ende angeordnete gewindefreie Spindelbasis 72. Die Spindelbasis 72 ist in Form einer gegenüber dem Spindelkörper mit dem Außengewinde 73 umlaufenden Verbreiterung ausgebildet, wobei an zwei diametral gegenüberliegenden Stellen der Spindelbasis 72 Anschläge 83 ausgebildet sind. Bei dem dargestellten Ausführungsbeispiel sind diese Anschläge 83 durch Vorsprünge realisiert, deren Höhe sich allmählich in Umfangsrichtung der Gewindespindel 70 bzw. der Spindelbasis 72 wie in Figur 22 gezeigt vergrößert. Die Höhe der Vorsprünge bzw. Anschläge 83 definiert dabei in Umfangsrichtung wirkende (radiale) Anschlagflächen, während die Oberseite der Vorsprünge bzw. Anschläge 83 Anschlagflächen in axialer Richtung definieren.

Wie insbesondere aus Figur 20 ersichtlich ist, ist im Inneren jeder Halbschale 50 an dem dem Hohlraum 54 zugewandten Endabschnitt des Innengewindes 53 ein Vorsprung bzw. Anschlag 63 ausgebildet, dessen Form komplementär zu den Vorsprüngen bzw. Anschlägen 83 der Spindelbasis 72 sein kann. Bei dem dargestellten Ausführungsbeispiel ist jedoch der Vorsprung bzw. Anschlag 63 ohne eine der geneigten axialen Oberseite der Anschläge 83 entsprechende Neigung versehen. Der Vorsprung bzw. Anschlag 63 definiert wiederum zwei Anschlagflächen, nämlich eine in der Ebene der entsprechenden Trennfläche der Halbschale 50, um zusammen mit dem entsprechenden Anschlag bzw. Vorsprung 83 der Spindelbasis 72 die Relativbewegung der Gewindespindel 70 gegenüber der entsprechenden Halbschale 50 in Umfangsrichtung zu begrenzen, und eine sich in die axiale Richtung der Halbschale 50 erstreckende Anschlagfläche, wobei zusammen mit der axialen Oberseite des entsprechenden Anschlags bzw. Vorsprungs 83 der Spindelbasis 72 eine Begrenzung der Relativbewegung der Gewindespindel 70 gegenüber der Halbschale 50 auch in axialer Richtung erzielt wird. Insbesondere ist durch die Verläufe der Anschlagsflächen 63 und 83 ein formschlüssiger und keilförmiger Anschlag realisiert. Analog zu den Vorsprüngen bzw. Anschlägen 83 der Spindelbasis 72 sind nach Zusammensetzen der beiden Halbschalen 50 ebenfalls zwei im Wesentlichen diametral gegenüberliegende Gegenanschläge 63 vorhanden.

Auch am oberen Ende der Gewindespindel 70 bzw. der Halbschalen 50 sind entsprechende Anschläge ausgestaltet, welche eine Relativbewegung der Gewindespindel 70 gegenüber den Halbschalen 50 sowohl in axialer Richtung als auch in Umfangsrichtung begrenzen. Dabei ist aus Figur 21 - Figur 26 ersichtlich, dass von dem Spindelkopf 71 die bereits erwähnten, diametral gegenüberliegenden nasenartigen Vorsprünge 78 hervorstehen, welche in die Führungsnuten 17 des Gehäuses 10 einzuführen sind. Diese nasenartigen Vorsprünge 78 besitzen an ihrer Unterseite Vorsprünge 82, welche die Anschläge sowohl in Umfangsrichtung als auch in axialer Richtung definieren. Aus den Darstellungen der Halbschalen 50 von Figur 16 - Figur 20 ist ersichtlich, dass am oberen Rand jeder Halbschale 50 an einem Umfangsende ein Anschlag 61 ausgebildet ist, welcher insbesondere durch eine allmählich zunehmende Vergrößerung der Höhe des Rands der entsprechenden Halbschale 50 realisiert ist. Dieser Anschlag 61 wirkt mit dem entsprechenden Anschlag 82 der Gewindespindel 70 zusammen. Insbesondere definiert der Anschlag 61 der Halbschale 50 eine Anschlagfläche in Umfangsrichtung für die entsprechende Anschlagfläche in Umfangsrichtung des Vorsprungs 82 der Gewindespindel 70, während darüber hinaus durch die Oberseite des Anschlags 61 in axialer Richtung eine entsprechende Anschlagfläche für die Anschlagfläche des Vorsprungs 82 bzw. für die Unterseite des nasenartigen Vorsprungs 78 realisiert ist. Durch die allmählich zunehmende Höhe dieser axialen Anschlagfläche des Anschlags 61 der Halbschale 50 wird zudem ein formschlüssiger und keilförmiger Anschlag in axialer Richtung realisiert. Nach Zusammensetzen der Halbschalen 50 sind zwei im Wesentlichen diametral gegenüberliegende Anschläge 61 entsprechend den ebenfalls im Wesentlichen diametral gegenüberliegenden Anschlägen 82 der Gewindespindel 70 ausgebildet.

Aus der vorhergehenden Beschreibung ist ersichtlich, dass die Anschläge und Gegenanschläge der Halbschalen 50 und der Gewindespindel 70 jeweils in gewindefreien Abschnitten der Halbschalen 50 bzw. der Gewindespindel 70 ausgebildet sind.

Die nasenartigen Vorsprünge 78 des Spindelkopfs 71 weisen mehrere in Umfangsrichtung benachbart angeordnete wellenartige Rippen 79 auf, wobei jede dieser Rippen 79 eine sich in axialer Richtung erstreckende Erhebung 80 besitzt. Durch diese filigrane Ausbildung der nasenartigen Vorsprünge 78 kann erzielt werden, dass jede Rippe 79 eine Linienlast aufnehmen kann. Die Rippen 79 dienen als Versteifungsrippen, um auch einen reibschlüssigen Kraftanteil abzufangen, und unterstützen somit einen formschlüssigen Anschlag der Gewindespindel 78 im Inneren des Gehäuses 10 an dessen stirnseitigen Ende. Diese filigrane Ausbildung der nasenartigen Vorsprünge 78 ist insbesondere deshalb möglich, da durch die zuvor beschriebene Ausgestaltung der Anschläge der Halbschalen 50 und der Gewindespindel 70 mit Anschlagflächen, welche sowohl in Umfangsrichtung als auch in axialer Richtung wirken, selbst bei einem Missbrauch bzw. bei Aufbringen einer unzulässig hohen Verstellkraft eine Beschädigung oder sogar ein Abreißen der nasenartigen Vorsprünge 78 zuverlässig verhindert werden kann.

Aus den Darstellungen der Gewindespindel in Figur 21 - Figur 24 ist ersichtlich, dass das Außengewinde 73 der Gewindespindel 70 nicht vollständig umlaufend ausgebildet ist. Stattdessen sind in Längsrichtung der Gewindespindel verlaufende gewindefreie Abschnitte 74 in Form von Rillen vorgesehen, welche das Außengewinde 73 in drei im Wesentlichen gleich große und in Umfangsrichtung der Gewindespindel gleichmäßig angeordnete bzw. beabstandete Gewindeteilabschnitte unterteilen. Diese Gewindeteilabschnitte besitzen somit in Längsrichtung der Gewindespindel im Wesentlichen eine gleiche Länge und in Umfangsrichtung der Gewindespindel im Wesentlichen eine gleiche Breite, das heißt sie erstrecken sich im Wesentlichen über einen gleichen Winkel. Durch diese Drittelung des Außengewindes 73 der Gewindespindel 70 kann erzielt werden, dass ein Fertigungswerkzeug zur Fertigung der Gewindespindel 73 im Bereich der gewindefreien Abschnitte 74 schließen kann, wobei darüber hinaus durch den gewählten Dreibein-Ansatz einer ausreichende Stabilität der Gewindespindel innerhalb der Halbschalen 50 gewährleistet ist.

Der Spindelkopf 72 umfasst in seiner Seitenwand die bereits erwähnte radiale Öffnung 75 zum Einsetzen des Nippels des Drahts der Bowdenzuganordnung, wobei die radiale Öffnung mit dem ebenfalls in der Seitenwand ausgebildeten Schlitz 76 mit der an der Stirnseite der Gewindespindel ausgebildeten axialen Öffnung 77 in Verbindung steht, so dass nach Einsetzen des Nippels des Drahts der Bowdenzuganordnung durch die radiale Öffnung 14 in der Seitenwand des Gehäuses 10 und die radiale Öffnung 75 in der Seitenwand des Spindelkopfs 71 der Draht entlang der Schlitze 15 und 76 in die axialen Öffnungen 13 und 77 des Gehäuses 10 bzw. der Gewindespindel 70 bewegt werden kann, um somit den Draht in axialer Richtung aus der Gewindespindel 70 und dem Gehäuse 10 nach außen zu führen. Der Nippel des Drahts ist dabei in dem im Inneren der Gewindespindel 70 definierten Innenraum gehalten.

Wie insbesondere Figur 21, Figur 22 und Figur 25 entnommen werden kann, sind im Inneren des Spindelkopfs 71 mehrere in Längsrichtung entlang der Innenwand des Spindelkopfs 71 verlaufende Rippen 84 vorgesehen, wobei bei dem dargestellten Ausführungsbeispiel insbesondere vier derartige Rippen 84 vorgesehen sind, welche gleichmäßig entlang des Umfangs der Innenwand des Spindelkopfs 71 verteilt sind. Diese Rippen 84 dienen dazu, den Draht bzw. den an dem entsprechenden Drahtende angebrachten Nippel innerhalb der axialen Öffnung 77 derart zu positionieren, dass ein Anliegen des Nippels an der Innenwand des Spindelkopfs 71 verhindert wird, was ansonsten Reibungsverluste zur Folge hätte. Insbesondere sind die Rippen 84 derart ausgestaltet, dass der Nippel bzw. der Draht im Wesentlichen mittig in der axialen Öffnung 77 gehalten wird. Auf diese Weise ist auch sichergestellt, dass eine Verstellung der Gewindespindel 70 möglichst exakt in axialer Richtung auf den Draht der Bowdenzuganordnung übertragen wird, so dass ein Verkippen der Gewindespindel 70 innerhalb des Gehäuses 10 bzw. innerhalb der Halbschalen 50 vermieden werden kann.

Auf der gegenüberliegenden Seite der radialen Öffnung 75 ist in der Seitenwand des Spindelkopfs 71 eine weitere radiale Öffnung 81 in Form eines etwas kleineren Lochs ausgebildet, welche einen Eingriff eines Fertigungswerkzeugs zur Herstellung der Gewindespindel ermöglicht. Bei der Fertigung der Gewindespindel ist eine möglichst konzentrische Lage der Spindel gegenüber dem Fertigungswerkzeug erforderlich. Die radialen Öffnungen 81 und 75 ermöglichen, dass während des Einschiebens eines Schiebers des Fertigungswerkzeugs in den Innenraum der Spindel während deren Fertigung die Spindel zuverlässig in Position gehalten werden kann. Dies ermöglicht eine filigrane Fertigung der Gewindespindel 70.

## Patentansprüche

1. Verstellvorrichtung für eine Bowdenzuganordnung,
mit einem Gehäuse (10),
mit einem ersten Gewindeteil (70), welches in dem Gehäuse (10) drehfest und axial beweglich geführt und mit der Bowdenzuganordnung zu koppeln ist, und
mit einem zweiten Gewindeteil (50), welches in dem Gehäuse (10) axialfest und drehbar angeordnet ist und sich mit dem ersten Gewindeteil (70) in Gewindeeingriff befindet,
wobei das Gehäuse (10) einen Vorsprung (16) mit einer Öffnung (13) aufweist, **dadurch gekennzeichnet,**
**dass** eine Hülse (30) vorgesehen ist, welche eine Öffnung (32) zur Aufnahme einer Hülle der Bowdenzuganordnung aufweist, wobei die Hülse (30) ein Durchgangsloch (36) aufweist, durch welches ein Draht der Bowdenzuganordnung zur Kopplung mit dem ersten Gewindeteil (70) durch Führen des Drahts durch die Öffnung (13) des Vorsprungs (16) des Gehäuses (10) führbar ist, und wobei die Hülse (30) einen Randabschnitt (33) aufweist, welcher bei Aufsetzen der Hülse (30) auf den Vorsprung (16) des Gehäuses (10) den Vorsprung des Gehäuses umgreift.

2. Verstellvorrichtung nach Anspruch 1,
**dadurch gekennzeichnet,**
**dass** die zur Aufnahme der Hülle der Bowdenzuganordnung vorgesehene Öffnung (32) an einem Längsende der Hülse (30) und der Randabschnitt (33) an einem anderen Längsende der Hülse (30) ausgebildet ist.

3. Verstellvorrichtung nach Anspruch 1 oder 2,
**dadurch gekennzeichnet,**
**dass** die Hülse (30) eine Anschlagfläche für die Hülle der Bowdenzuganordnung aufweist.

4. Verstellvorrichtung nach Anspruch 3,
**dadurch gekennzeichnet,**
**dass** die Anschlagfläche für die Hülle der Bowdenzuganordnung das Durchgangsloch (36) für den Draht der Bowdenzuganordnung aufweist.

5. Verstellvorrichtung nach Anspruch 3 oder 4,
**dadurch gekennzeichnet,**
**dass** die Anschlagfläche für die Hülle der Bowdenzuganordnung im Wesentlichen senkrecht zur Längsachse der Hülse (30) verläuft.

6. Verstellvorrichtung nach einem der Ansprüche 3-5,
**dadurch gekennzeichnet,**
**dass** die Anschlagfläche für die Hülle der Bowdenzuganordnung durch einen Vorsprung (35) gebildet ist, welcher derart in den Randabschnitt (33) hineinragt, dass bei Aufsetzen der Hülse (30) auf den Vorsprung (16) des Gehäuses (10) der Vorsprung (35) der Hülse (30) in die Öffnung (13) des Vorsprungs des Gehäuses hineinragt.

7. Verstellvorrichtung nach Anspruch 6,
**dadurch gekennzeichnet,**
**dass** der Vorsprung (16) des Gehäuses (10) bei Aufsetzen der Hülse (30) in einer zwischen dem Randabschnitt (33) und dem Vorsprung (35) der Hülse (30) ausgebildeten Vertiefung (34) formschlüssig gehalten ist.

8. Verstellvorrichtung nach Anspruch 6 oder 7,
**dadurch gekennzeichnet,**
**dass** der Vorsprung (35) der Hülse (30) eine im Wesentlichen kreisförmige Querschnittsform aufweist.

9. Verstellvorrichtung nach einem der vorhergehenden Ansprüche,
**dadurch gekennzeichnet,**
**dass** der Vorsprung (16) des Gehäuses (10) und der Randabschnitt (33) der Hülse (30) eine im Wesentlichen kreisförmige Querschnittsform aufweisen.

10. Verstellvorrichtung nach einem der vorhergehenden Ansprüche,
**dadurch gekennzeichnet,**
**dass** die Hülse (30) bezüglich ihrer Längsachse rotationssymmetrisch ausgebildet ist.

11. Verstellvorrichtung nach einem der vorhergehenden Ansprüche,
**dadurch gekennzeichnet,**
**dass** in der Öffnung (32) der Hülse (30), welche zur Aufnahme der Hülle der Bowdenzuganordnung vorgesehen ist, Rippen (37) zur Fixierung der Hülle der Bowdenzuganordnung in der Öffnung (32) der Hülse (30) ausgebildet sind.

12. Verstellvorrichtung nach einem der vorhergehenden Ansprüche,
**dadurch gekennzeichnet,**
**dass** in einer Seitenwand des Gehäuses (10) eine mit der Öffnung (13) in dem Vorsprung (16) des Gehäuses (10) über einen Schlitz (15) in Verbindung stehende weitere Öffnung (14) ausgebildet ist, und
**dass** der Randabschnitt (33) der Hülse (30) derart ausgestaltet ist, dass bei Aufsetzen der Hülse (30) auf den Vorsprung (16) des Gehäuses (10) eine Verformung des Schlitzes (15) des Gehäuses (10) und der im Vorsprung (16) des Gehäuses (10) ausgebildeten Öffnung (13) bei einer Betätigung der Verstellvorrichtung vermieden ist.

13. Verstellvorrichtung nach einem der vorhergehenden Ansprüche,
**dadurch gekennzeichnet,**
**dass** die zur Aufnahme der Hülle der Bowdenzuganordnung vorgesehene Öffnung (32) in einem durch einen geschlossenen umlaufenden Rand eines Aufnahmeabschnitts (31) der Hülse (30) ausgebildet ist.

14. Verstellvorrichtung nach einem der vorhergehenden Ansprüche,
**dadurch gekennzeichnet,**
**dass** das erste Gewindeteil (70) eine Gewindespindel mit einem Außengewinde (73) und das zweite Gewindeteil (50) hohlzylinderförmig mit einem Innengewinde (53), welches mit dem Außengewinde (73) der Gewindespindel in Gewindeeingriff steht, ist.

15. Verstellvorrichtung nach Anspruch 14,
**dadurch gekennzeichnet,**
**dass** das hohlzylinderförmige zweite Gewindeteil (50) durch zwei Halbschalen gebildet ist, wobei an Innenwänden der Halbschalen Gewindeteilabschnitte (53) des Innengewindes des zweiten Gewindeteils ausgebildet sind.

16. Verstellvorrichtung nach Anspruch 15,
**dadurch gekennzeichnet,**
**dass** die beiden Halbschalen (50) durch Vorsprünge (59), welche von Außenseiten der Halbschalen (50) hervorstehen, in dem Gehäuse (10) axialfest gehalten sind.

17. Verstellvorrichtung nach einem der vorhergehenden Ansprüche,
**dadurch gekennzeichnet,**
**dass** das Gehäuse (10) und das erste Gewindeteil (70) jeweils eine in einer entsprechenden Seitenwand ausgebildete Öffnung (14; 75) und eine an einem entsprechenden Längsende ausgebildete axiale Öffnung (13; 77), welche über einen in der entsprechenden Seitenwand ausgebildeten Schlitz (15; 76) mit der in der entsprechenden Seitenwand ausgebildeten Öffnung (14; 75) in Verbindung stehen, aufweisen.

18. Verstellvorrichtung nach einem der vorhergehenden Ansprüche,
**dadurch gekennzeichnet,**
**dass** das zweite Gewindeteil (50) mit einem Betätigungselement zum Drehen des zweiten Gewindeteils (50) in dem Gehäuse (10) koppelbar ist.

19. Verstellvorrichtung nach einem der vorhergehenden Ansprüche,
**dadurch gekennzeichnet,**
**dass** das Gehäuse (10) aus einem Polyamid-Kunststoff gefertigt ist.

20. Verstellvorrichtung nach einem der vorhergehenden Ansprüche,
**dadurch gekennzeichnet,**
**dass** das erste Gewindeteil (70) aus einem Polybutylenterephthalat-Kunststoff gefertigt ist.

21. Verstellvorrichtung nach einem der vorhergehenden Ansprüche,
**dadurch gekennzeichnet,**
**dass** das zweite Gewindeteil (50) aus einem Polyoxymethylen-Kunststoff gefertigt ist.

## Claims

1. Adjustment device for a Bowden cable arrangement with a housing (10),
with a first threaded part (70), which is guided in the housing (10) such as to be torsionally resistant and axially movable, and which is to be coupled to the Bowden cable arrangement, and
with a second threaded part (50), which is arranged in an axially resistant and rotatable manner in the housing (10) and is in threaded engagement with the first threaded part (70),
whereby the housing (10) has a projection (16) with an opening (13) **characterized in that**
a sleeve (30) is provided for, which has an opening (32) for accommodating a sheath of the Bowden cable arrangement, whereby the sleeve (30) has a passage hole (36), through which a wire of the Bowden cable arrangement can be guided to be coupled to the first threaded part (70) by guiding the wire through the opening (13) of the projection (16) of the housing (10), and whereby the sleeve (30) has a peripheral section (33) which, when the sleeve (30) is placed on the projection (16) of the housing (10), engages around the projection of the housing.

2. Adjustment device according to Claim 1,
**characterized in that**
the opening (32) provided to accommodate the sheath of the Bowden cable arrangement is formed at one longitudinal end of the sleeve (30) and the peripheral section (33) at another longitudinal end of the sleeve (30).

3. Adjustment device according to Claim 1 or 2,
**characterized in that**
the sleeve (30) has a stop surface for the sheath of the Bowden cable arrangement.

4. Adjustment device according to Claim 3,
**characterized in that**
the stop surface for the sheath of the Bowden cable arrangement has the passage hole (36) for the wire of the Bowden cable arrangement.

5. Adjustment device according to Claim 3 or 4,
**characterized in that**
the stop surface for the sheath of the Bowden cable arrangement runs essentially perpendicular to the longitudinal axis of the sleeve (30).

6. Adjustment device according to any one of Claims 3-5,
**characterized in that**
the stop surface for the sheath of the Bowden cable arrangement is formed by a projection (35), which projects into the peripheral section (33) in such a way that, when the sleeve (30) is placed on the projection (16) of the housing (10), the projection (35) of the sleeve (30) projects into the opening (13) of the projection of the housing.

7. Adjustment device according to Claim 6,
**characterized in that**
the projection (16) of the housing (10), when the sleeve (30) is placed in position, is held in positive fit in an indentation (34) formed between the peripheral section (33) and the projection (35) of the sleeve (30).

8. Adjustment device according to Claim 6 or 7,
**characterized in that**
the projection (35) of the sleeve (30) has an essentially circular cross-section.

9. Adjustment device according to any one of the foregoing claims, **characterized in that**
the projection (16) of the housing (10) and the peripheral section (33) of the sleeve (30) have an essentially circular cross-section.

10. Adjustment device according to any one of the foregoing claims, **characterized in that**
the sleeve (30) is designed to be rotationally symmetrical in relation to its longitudinal axis.

11. Adjustment device according to any one of the foregoing claims, **characterized in that**
ribs (37) for fixing the sheath of the Bowden cable arrangement in the opening (32) of the sleeve (30) are formed in the opening (32) of the sleeve (30), which is provided so as to accommodate the sheath of the Bowden cable arrangement.

12. Adjustment device according to any one of the foregoing claims, **characterized in that**
in a side wall of the housing (10) a further opening (14) is formed, which is connected with the opening (13) in the projection (16) of the housing (10) via a slot (15), and
that the peripheral section (33) of the sleeve (30) is designed in such a way that, when the sleeve (30) is placed on the projection (16) of the housing (10), deformation of the slot (15) of the housing (10) and of the opening (13) formed in the projection (16) of the housing (10) is avoided when the adjustment device is actuated.

13. Adjustment device according to any one of the foregoing claims, **characterized in that**
the opening (32) provided in order to accommodate the sheath of the Bowden cable arrangement is formed in a closed circumferential edge of an accommodation section (31) of the sleeve (30).

14. Adjustment device according to any one of the foregoing claims, **characterized in that**
the first threaded part (70) is a threaded spindle with an outer thread (73) and the second threaded part (50) is a hollow cylinder in form, with an inner thread (53) which is in threaded engagement with the outer thread (73) of the threaded spindle.

15. Adjustment device according to Claim 14,
**characterized in that**
the second threaded part (50), in the form of a hollow cylinder, is formed by two half-shell elements, whereby threaded part sections (53) of the inner thread of the second threaded part are formed on inner walls of the half-shell elements.

16. Adjustment device according to Claim 15,
**characterized in that**
the two half-shell elements (50) are held in an axially secure manner in the housing (10) by projections (59) which project from outer sides of the half-shell elements (50).

17. Adjustment device according to any one of the foregoing claims,
**characterized in that**
the housing (10) and the first threaded part (70) in each case have an opening (14; 75) formed in a corresponding side wall and an axial opening (13; 77) formed on a corresponding longitudinal end, which are connected via a slot (15; 76) formed in the corresponding side wall with the opening (14; 75) formed in the corresponding side wall.

18. Adjustment device according to any one of the foregoing claims,
**characterized in that**
the second threaded part (50) can be coupled to an actuating element for rotating the second threaded part (50) in the housing (10).

19. Adjustment device according to any one of the foregoing claims,
**characterized in that**
the housing (10) is made of a polyamide plastic.

20. Adjustment device according to any one of the foregoing claims,
**characterized in that**
the first threaded part (70) is made of a polybutylene terephthalate plastic.

21. Adjustment device according to any one of the foregoing claims,
**characterized in that**
the second threaded part (50) is made of a polyoxymethylene plastic.

## Revendications

1. Dispositif de réglage pour un ensemble à câble Bowden,
comportant un boîtier (10),
comportant une première pièce filetée (70), laquelle est fixe en rotation et mobile axialement dans le boîtier (10) et est à accoupler avec l'ensemble à câble Bowden, et
comportant une deuxième pièce filetée (50), laquelle est axialement fixe et mobile en rotation dans le boîtier (10) et se trouve en prise avec le filet de la première pièce filetée (70),
le boîtier (10) étant pourvu d'un épaulement (16) avec une ouverture (13),
**caractérisé**
**en ce qu'**il est prévu une douille (30) présentant un orifice (32) pour la réception d'une gaine de l'ensemble à câble Bowden, la douille (30) présentant un trou de passage (36) par lequel un fil de l'ensemble à câble Bowden peut être guidé pour être accouplé avec la première pièce filetée (70) par insertion du fil dans l'ouverture (13) de l'épaulement (16) du boîtier (10), et la douille (30) présentant une partie de bordure (33) entourant l'épaulement du boîtier lors de la mise en place de la douille (30) sur l'épaulement (16) du boîtier (10).

2. Dispositif de réglage selon la revendication 1, **caractérisé**
**en ce que** l'orifice (32) prévu pour la réception de la gaine de l'ensemble à câble Bowden est ménagé sur une extrémité longitudinale de la douille (30), et la partie de bordure (33) sur une autre extrémité longitudinale de la douille (30).

3. Dispositif de réglage selon la revendication 1 ou la revendication 2,
**caractérisé**
**en ce que** la douille (30) comporte une surface de butée pour la gaine de l'ensemble à câble Bowden.

4. Dispositif de réglage selon la revendication 3,
**caractérisé**
**en ce que** la surface de butée pour la gaine de l'ensemble à câble Bowden comporte le trou de passage (36) pour le fil de l'ensemble à câble Bowden.

5. Dispositif de réglage selon la revendication 3 ou la revendication 4,
**caractérisé**
**en ce que** la surface de butée pour la gaine de l'ensemble à câble Bowden s'étend sensiblement perpendiculairement à l'axe longitudinal de la douille (30).

6. Dispositif de réglage selon l'une des revendications 3 à 5,
**caractérisé**
**en ce que** la surface de butée pour la gaine de l'ensemble à câble Bowden est formée par un épaulement (35), lequel s'enfonce dans la partie de bordure (33) de telle manière que l'épaulement (35) de la douille (30) s'enfonce dans l'ouverture (13) de l'épaulement du boîtier lors de la mise en place de la douille (30) sur l'épaulement (16) du boîtier (10).

7. Dispositif de réglage selon la revendication 6, **caractérisé**
**en ce que** l'épaulement (16) du boîtier (10) est maintenu par correspondance de forme lors de la mise en place de la douille (30) dans un évidement (34) formé entre la partie de bordure (33) et l'épaulement (35) de la douille (30).

8. Dispositif de réglage selon la revendication 6 ou la revendication 7,
**caractérisé**
**en ce que** la section de l'épaulement (35) de la douille (30) est de forme sensiblement circulaire.

9. Dispositif de réglage selon l'une des revendications précédentes,
**caractérisé**
**en ce que** les sections de l'épaulement (16) du boîtier (10) et de la partie de bordure (33) de la douille (30) sont de forme sensiblement circulaire.

10. Dispositif de réglage selon l'une des revendications précédentes,
**caractérisé**
**en ce que** la douille (30) est réalisée de manière rotationnellement symétrique par rapport à son axe longitudinal.

11. Dispositif de réglage selon l'une des revendications précédentes,
**caractérisé**
**en ce que** des nervures (37) pour la fixation de la gaine de l'ensemble à câble Bowden dans l'orifice (32) de la douille (30) sont formées dans l'orifice (32) de la douille (30) prévu pour la réception de la gaine de l'ensemble à câble Bowden.

12. Dispositif de réglage selon l'une des revendications précédentes,
**caractérisé**
**en ce qu'**une autre ouverture (14) reliée par une fente (15) à l'ouverture (13) dans l'épaulement (16) du boîtier (10) est ménagée dans une paroi latérale du boîtier (10), et
**en ce que** la partie de bordure (33) de la douille (30) est réalisée de manière à empêcher une déformation de la fente (15) du boîtier (10) lors de la mise en place de la douille (30) sur l'épaulement (16) du boîtier (10), et de l'ouverture (13) ménagée dans l'épaulement (16) du boîtier (10), en cas d'actionnement du dispositif de réglage.

13. Dispositif de réglage selon l'une des revendications précédentes,
**caractérisé**
**en ce que** l'orifice (32) prévu pour la réception de la gaine de l'ensemble à câble Bowden est ménagé dans un bord périphérique fermé d'une partie de réception (31) de la douille (30).

14. Dispositif de réglage selon l'une des revendications précédentes,
**caractérisé**
**en ce que** la première pièce filetée (70) est une tige filetée avec un filet extérieur (73), et en ce que la deuxième pièce filetée (50) est en forme de cylindre creux avec un filet intérieur (53), lequel se trouve en prise avec le filet extérieur (73) de la tige filetée.

15. Dispositif de réglage selon la revendication 14, **caractérisé**
**en ce que** la deuxième pièce filetée (50) en forme de cylindre creux est composée de deux demi-coques, des segments de pièce filetée (53) du filet intérieur de la deuxième pièce filetée étant formés sur les parois intérieures des demi-coques.

16. Dispositif de réglage selon la revendication 15,
**caractérisé**
**en ce que** les deux demi-coques (50) sont maintenues de manière axialement fixe dans le boîtier (10) par des saillies (59) dépassant des faces extérieures des demi-coques (50).

17. Dispositif de réglage selon l'une des revendications précédentes,
**caractérisé**
**en ce que** le boîtier (10) et la première pièce filetée (70) présentent respectivement une ouverture (14 ; 75) ménagée dans une paroi latérale correspondante et une ouverture axiale (13 ; 77) ménagée sur une extrémité longitudinale correspondante, laquelle est reliée à l'ouverture (14 ; 75) ménagée dans la paroi latérale correspondante par une fente (15 ; 76) ménagée dans la paroi latérale correspondante.

18. Dispositif de réglage selon l'une des revendications précédentes,
**caractérisé**
**en ce que** la deuxième pièce filetée (50) peut être accouplée avec un élément d'actionnement pour la rotation de la deuxième pièce filetée (50) dans le boîtier (10).

19. Dispositif de réglage selon l'une des revendications précédentes,
**caractérisé**
**en ce que** le boîtier (10) est fabriqué dans une matière synthétique polyamide.

20. Dispositif de réglage selon l'une des revendications précédentes,
**caractérisé**
**en ce que** la première pièce filetée (70) est fabriquée dans une matière synthétique polybutylène téréphtalate.

21. Dispositif de réglage selon l'une des revendications précédentes,
**caractérisé**
**en ce que** la deuxième pièce filetée (50) est fabriquée dans une matière synthétique polyoxyméthylène.
